# EUROPEAN PATENT SPECIFICATION

(11) **EP 2 819 531 B1**
(45) Date of publication and mention of the grant of the patent: **20.01.2016**
(21) Application number: 13709698.8
(22) Date of filing: 01.03.2013
(51) Int. Cl.: A23L 3/3463, A23L 3/3481, A23L 3/3526, A23B 4/18, A23L 3/3508, A23B 4/20

(54) **ANTI-MICROBIAL FOOD PROCESSING COMPOSITIONS INCLUDING CERAGENIN COMPOUNDS AND METHODS OF USE**
ANTIMIKROBIELLE LEBENSMITTELVERARBEITUNGSZUSAMMENSETZUNGEN MIT CERAGENINVERBINDUNGEN UND VERFAHREN ZUR VERWENDUNG
COMPOSITIONS ANTIMICROBIENNES DE TRAITEMENT ALIMENTAIRE COMPRENANT DES COMPOSÉS DE CÉRAGÉNINE ET PROCÉDÉS D'UTILISATION

(30) Priority: 01.03.2012 US 201261605639 P
(43) Date of publication of application: 07.01.2015
(73) Proprietor: Brigham Young University, Provo, UT 84602 (US)
(72) Inventor: SAVAGE, Paul, B., Mapleton, UT 84664 (US)
(74) Representative: Schwarz & Partner
(86) International application number: PCT/US2013/028755
(87) International publication number: WO 2013/131060

(56) References cited:
- WO-A1-02/14342
- XIN-ZHONG LAI ET AL: "Ceragenins: Cholic Acid-Based Mimics of Antimicrobial Peptides", ACCOUNTS OF CHEMICAL RESEARCH, vol. 41, no. 10, 21 October 2008 (2008-10-21), pages 1233-1240, XP055017263, ISSN: 0001-4842, DOI: 10.1021/ar700270t
- MICHAEL D HOWELL ET AL: "Ceragenins: A Class of Antiviral Compounds to Treat Orthopox Infections", JOURNAL OF INVESTIGATIVE DERMATOLOGY, vol. 129, no. 11, 11 June 2009 (2009-06-11), pages 2668-2675, XP055051201, ISSN: 0022-202X, DOI: 10.1038/jid.2009.120
- LI CHUNHONG ET AL: "Antimicrobial activities of amine- and guanidine-functionalized cholic acid derivatives", ANTIMICROBIAL AGENTS AND CHEMOTHERAPY, AMERICAN SOCIETY FOR MICROBIOLOGY, WASHINGTON, DC, US, vol. 43, no. 6, 1 June 1999 (1999-06-01), pages 1347-1349, XP002189346, ISSN: 0066-4804

## Description

### BACKGROUND

Eliminating and/or minimizing growth of bacteria, viruses and other harmful microbes in the processing of food products, particularly meat products, is a major concern. In a slaughterhouse or similar setting bacterial infestation of meat during processing can lead to serious illness, and even death as contaminated meat products are distributed to consumers. Thus, it is very important to the food safety of such products that bacteria and other microbes be adequately controlled during processing, packaging, and shipping of such food products.

*Campylobacter* bacteria and *Salmonella* bacteria represent two of the main causes of food borne illness in the United States, contributing to an estimated 9.4 million food-related illnesses, nearly 56,000 hospitalizations, and over 1,300 deaths each year in the United States alone. The cost of this problem is about $48 billion each year.

One particular difficulty in adequately controlling the growth of such bacteria lies in the fact that although *Campylobacter* and *Salmonella* may contribute to a large share of the problem, a wide variety of bacteria can be encountered in such food processing, making it difficult to always anticipate which particular bacterial strains are likely to be problematic. Furthermore, there are numerous specific strains within each of the *Campylobacter* and *Salmonella* classes. In addition, available antibiotics are typically selective in their efficacy. In other words, although a given antibiotic may be effective against a particular bacterial strain, it may have little or no efficacy against another bacterial strain. In addition, some bacterial strains are known to develop resistance to antibiotics, such that it has been difficult up to the present time to adequately control bacterial growth through the use of antibiotics in the field of food processing.

In order to minimize or prevent growth of the wide variety of bacterial strains that may be encountered, such meat products are typically repeatedly washed in an aqueous solution including a relatively high concentration of peracetic acid, which oxidizes any bacteria present so as to maintain the safety of the meat product. While this has been found to quite effectively control the growth of the bacteria, the use of peracetic acid is not selective relative to bacteria only, but also oxidizes the meat or other food product itself. Because such organic acid processing is not selective, it can negatively affect the appearance (e.g., color), texture, taste, smell, and other quality characteristics of the meat or other food product. Thus, particular care must be taken in balancing the need to adequately sanitize the meat or other food product while also attempting to minimize negative effects on quality characteristics of the product.

In addition, the anti-microbial action of peracetic acid and similarly employed peracids is particularly short in duration. This is a result of the fact that they oxidize whatever they come in contact with. Longer acting compounds that are capable of further prolonging the shelf life of such fresh food products typically cannot be used as a practical matter either because they are potentially toxic to humans or because their effect on quality characteristics of the food products are too severe.

WO 0214342 discloses that ceragenin compounds might be useful as preservatives in processed food when verified as effective against organisms like Salmonella.

### BRIEF SUMMARY

Disclosed herein are anti-microbial wash compositions and methods for using these compositions in controlling microbe growth on a slaughtered meat food product by applying or contacting the anti-microbial wash composition to a surface of the slaughtered meat food product to kill microbes (e.g., bacteria) on a surface of the food product. The terms "applied" and "contacted" and their derivatives are used interchangeably herein. The anti-microbial wash compositions include a ceragenin compound dispersed (e.g., suspended or dissolved) in a fluid carrier. The ceragenin compound includes a sterol backbone and a number (e.g., at least two or at least three) of cationic groups attached to the sterol backbone.

Suitable examples of carriers include, but are not limited to, water, alcohols, oils, organic solvents, organic/aqueous emulsions, and combinations thereof. Wash compositions including such liquid carriers may be sprayed onto a desired food product, or may provide a bath into which the food product is dipped (e.g., immersed). It may also be possible for the carrier to comprise a gaseous carrier, within which the ceragenin compound(s) are dispersed (e.g., suspended), which gaseous "wash composition" may be blanketed around or otherwise applied or contacted with the surface of a food product. In any case, the ceragenin compounds may remain on the surface of the food product short term so as to provide continuing anti-microbial effect even after active application of the wash composition is completed (e.g., after the food product is withdrawn from a dip tank containing the wash composition or the wash composition is no longer being actively sprayed onto the food product).

In preferred embodiments, the ceragenin compound does not persist long term on the food product so as to minimize ingestion by the end consumer. For example, the ceragenin compound may degrade relatively quickly (e.g., a matter of days or weeks) due to environmental conditions. Furthermore, even if some residual ceragenin compound were to remain on the meat food product, the ceragenin compound may be adapted so as to be destroyed upon cooking of the meat. As a further precaution to minimize or prevent any negative effects associated with ingestion of such ceragenin compounds, the compounds may be adapted to be destroyed by lipase enzymes typically present within the stomach.

Finally, it has advantageously and surprisingly been found that the concentrations of such ceragenin compounds required to kill illness causing bacteria that may be present on the surface of such meat food products is well below the concentration required to kill beneficial bacteria that normally reside within the digestive system of those who would consume the treated food product. As such, even if some residual ceragenin compounds were to survive the above safeguards and enter a person's digestive system, their presence would little to no impact.

As described above, the ceragenin compounds may be selected so that the cationic groups are attached to the sterol backbone via a degradable linkage that will cause the ceragenin compound to degrade as a result of environmental action (e.g., as a result of exposure to pH values greater than about 6). In a specific embodiment, the cationic groups may be attached to the sterol backbone via a hydrolizable linkage so that the compound will degrade over time, e.g., after use. Such embodiments may be preferred where it is desirable that the compound be readily degradable within the environment, so as to minimize the possibility of ingestion by an end user, and/or build up of such compounds within the body of an end user. Furthermore, advantageously, the ceragenin compound can be configured so that its degradation products are materials that are naturally found within nature, and the body. While perhaps not preferred, in another embodiment, the cationic groups may be attached to the sterol backbone via a linkage that is not hydrolizable, so that the compound will persist significantly longer on the surface of the food product once applied.

According to an exemplary method of use an anti-microbial wash composition is provided that includes a fluid carrier and a ceragenin compound dispersed within the carrier. The carrier includes a sterol backbone and a number of cationic groups attached thereto. The ceragenin compound is included within the wash composition in a concentration range so as to be effective. The anti-microbial wash composition is contacted with a surface of a food product for a suitable period of time to kill one or more types of microbes on the surface of the food product. Furthermore, the concentration selected may be sufficiently high to kill illness causing bacteria such as *Campylobacter* and *Salmonella,* while at the same time being too low to kill beneficial bacteria that reside within the digestive system of a typical end consumer. This protects the end consumer from being subjected to something akin to an antibiotic flush in the event that residual ceragenin compound is ingested. As described above, because the ceragenin compounds are destroyed simply through environmental action, cooking, and the action of stomach lipase, it is unlikely that any such residual ceragenin compound would ever reach the intestinal tract of the end user.

It is contemplated that the anti-microbial wash compositions may be applied to a slaughtered meat food product, such as an animal (e.g., livestock) carcass. Such slaughtered animal carcasses may include, but are not limited to, carcasses of poultry, beef, bison, lamb, sheep, pork, fish, crustaceans, or other animal carcasses. The use of such a wash composition is not limited to animals specifically raised for slaughter, but could also be used in controlling microbe growth relative to any slaughtered animal carcass (e.g., wild game such as deer, elk, bear, duck, geese, rabbit, etc.). In addition, the wash compositions may be applied to meat products that are not strictly in the form of a carcass (e.g., applied to ground meats such as turkey, beef, bison, or sausage.

The anti-microbial wash compositions have been found to provide surprising and advantageous results over state of the art anti-microbial wash compositions, such as the use of peracetic acid. Peracids, such as peracetic acid, are not selective of microbes only, but oxidize the meat or other food product that they come in contact with. As a result, the color, texture, taste, smell, and other quality characteristics of the meat or other food product are affected, as the meat itself is oxidized by the peracid along with any bacteria that may be present. As the peracid oxidizes the meat food product, it exhibits effects similar to that observed when the meat is cooked. This undesirably alters the quality characteristics of the fresh meat or other food product. In addition, peracids are able to destroy bacteria present at the time of application, but because the peracids do not typically remain on the surface of the food product in a potent form after wash treatment for any significant period of time (e.g., they are typically consumed within seconds), they may have little or no efficacy in preventing bacterial contamination from occurring after application of a peracid wash composition (e.g., fighting off a contamination event).

The ceragenin compounds have been found to advantageously be selective relative to bacteria and other microbes (e.g., viruses and/or fungi) while not attacking the meat or other food product itself. Furthermore, they have also been found to be selective relative to illness causing bacteria rather than beneficial bacteria present within the digestive tract of end users. In other words, a concentration required to kill beneficial bacteria is significantly higher than that required to kill illness causing bacteria (e.g., by a factor of about 50 times). That said, the ceragenin compounds are not particularly selective relative to different strains of illness causing bacteria (i.e., they kill essentially all of them) at a relatively low dose. This characteristic is particularly beneficial as compared to traditional antibiotics which must be carefully paired to ensure that a given antibiotic will kill a given bacteria. Furthermore, antibiotics are also typically known to not be selective between beneficial and illness causing bacteria.

In addition, the ceragenin compounds do not oxidize or otherwise alter the quality characteristics of the meat or other food product, which characteristic is particularly beneficial as compared to the use of peracids. As a result, the ceragenin compounds are able to selectively kill a wide variety of illness causing bacteria (with little or no risk to beneficial bacteria in the digestive tract if residual ceragenin compound is ingested) on the surface of a slaughtered meat carcass or other food product without at the same time damaging or altering quality characteristics such as color, texture, taste, and smell.

In addition, because the ceragenin compounds can be formulated to be more stable than peracids, the ceragenin compound is able to be maintained short-term in a potent state on the surface of the meat or other food product, even after removal of the meat or other food product from a dip tank containing the wash composition or even after the wash composition is no longer being actively sprayed on the meat food product. For example, even where the carrier may dry or evaporate away, the ceragenin compounds may remain in place short term (e.g., up to several weeks) on the surface of the meat or other food product. These residual ceragenin compounds are thus able to destroy bacteria in the case that the meat food product becomes contaminated by bacteria after application of the wash composition (e.g., through a contamination event). As a result, the shelf-life of such meat food products may be significantly longer than that exhibited by the same products treated only with a state of the art peracid wash composition, which is not able to provide significant prospective anti-microbial protection.

Finally, while multiple peracid wash treatments are typically required in order to provide a desired level of food safety (e.g., typically a livestock animal carcass is washed with peracetic acid 3 times), as little as a single application of the present ceragenin containing wash compositions is sufficient to provide equivalent or better levels of food safety. These advantages thus allow one to effectively control microbe growth on a slaughtered meat carcass or other slaughtered meat food product while eliminating the disadvantages incumbent with state of the art peracid wash compositions and methods.

These and other objects and features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only illustrated embodiments of the invention and are therefore not to be considered limiting of its scope. The invention will be described and explained with additional specificity and detail through the use of the accompanying drawings in which:
Figure 1A illustrates exemplary hydrolysable cationic steroidal anti-microbial ("CSA") compounds;
Figure 1B illustrates exemplary non-hydrolysable CSA compounds;
Figure 2 is a graph illustrating the stability of CSA-44 as a function of pH;
Figure 3 is a graph illustrating spoilage microorganism levels in poultry carcasses over time for different CSA concentrations;
Figure 4 is a graph illustrating reduction of *Salmonella* bacteria on poultry carcasses for different CSA concentrations;
Figure 5 is a graph illustrating reduction of *Campylobacter* bacteria on poultry carcasses for different CSA concentrations;
Figure 6 is a graph illustrating reduction of *Salmonella* bacteria on poultry carcasses for different CSA concentrations; and
Figure 7 is a graph illustrating reduction of *Campylobacter* bacteria on poultry carcasses for different CSA concentrations.

### DETAILED DESCRIPTION

### I. Brief Introduction to Ceragenins

Ceragenin compounds, also referred to herein as cationic steroidal anti-microbial compounds ("CSAs"), are synthetically produced small molecule chemical compounds that include a sterol backbone having various charged groups (e.g., amine and cationic groups) attached to the backbone. The backbone can be used to orient the amine or guanidine groups on one face, or plane, of the sterol backbone. For example, a scheme showing a compound having primary amino groups on one face, or plane, of a backbone is shown below in Scheme I:

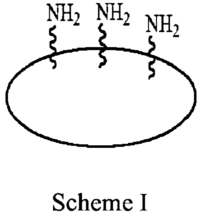

Ceragenins are cationic and amphiphilic, based upon the functional groups attached to the backbone. They are facially amphiphilic with a hydrophobic face and a polycationic face. Without wishing to be bound to any particular theory, the anti-microbial ceragenin compounds described herein act as anti-microbial agents (e.g., anti-bacterials, anti-fungals, and anti-virals). It is believed, for example, that the anti-microbial ceragenin compounds described herein act as anti-bacterials by binding to the cellular membrane of bacteria and other microbes and inserting into the cell membrane, forming a pore that allows the leakage of ions and cytoplasmic materials that are critical to the microbe's survival and leading to the death of the affected microbe. In addition, the anti-microbial ceragenin compound described herein may also act to sensitize bacteria to antibiotics. For example, at concentrations of the anti-microbial ceragenin compounds below the corresponding minimum bacteriostatic concentration, the ceragenins cause bacteria to become more susceptible to other antibiotics by increasing the permeability of the membrane of the bacteria.

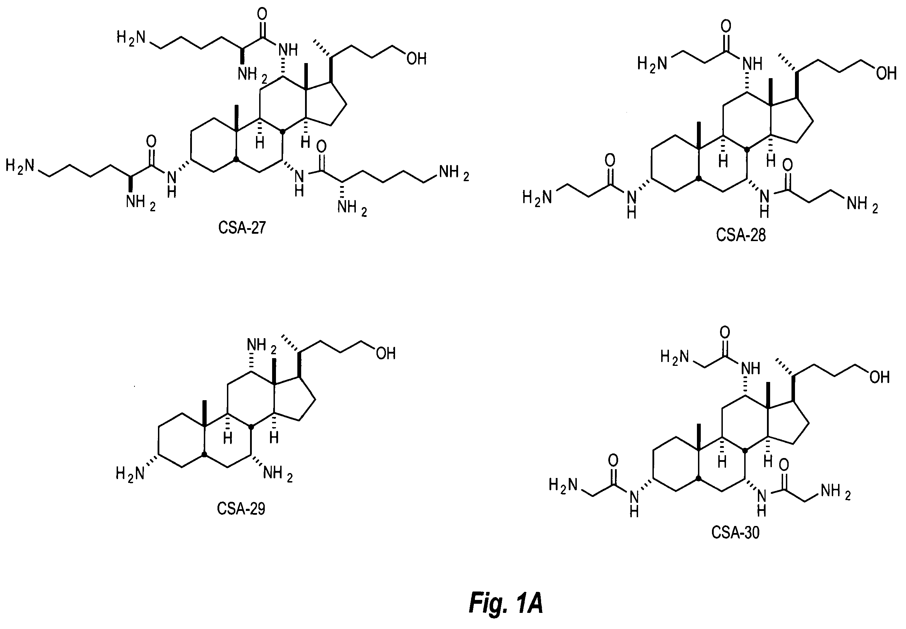

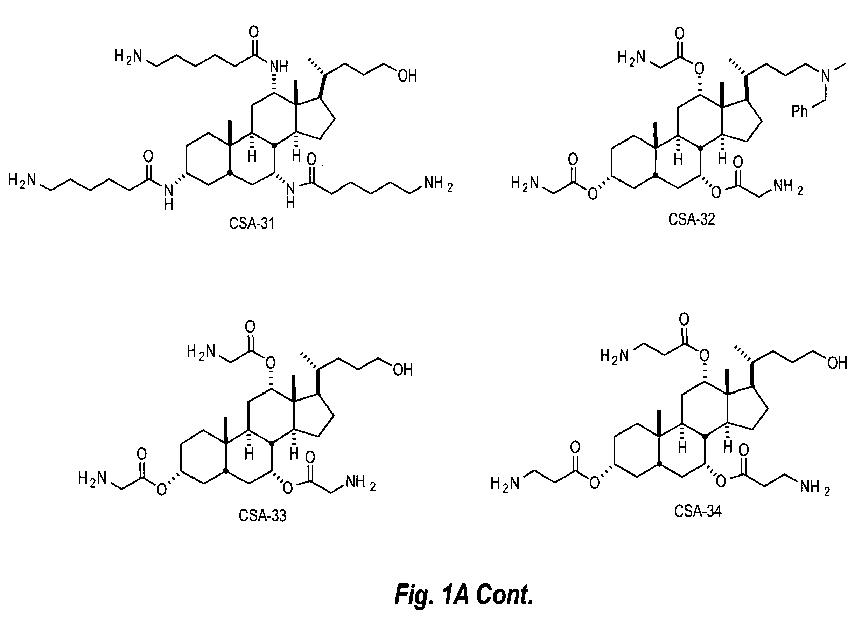

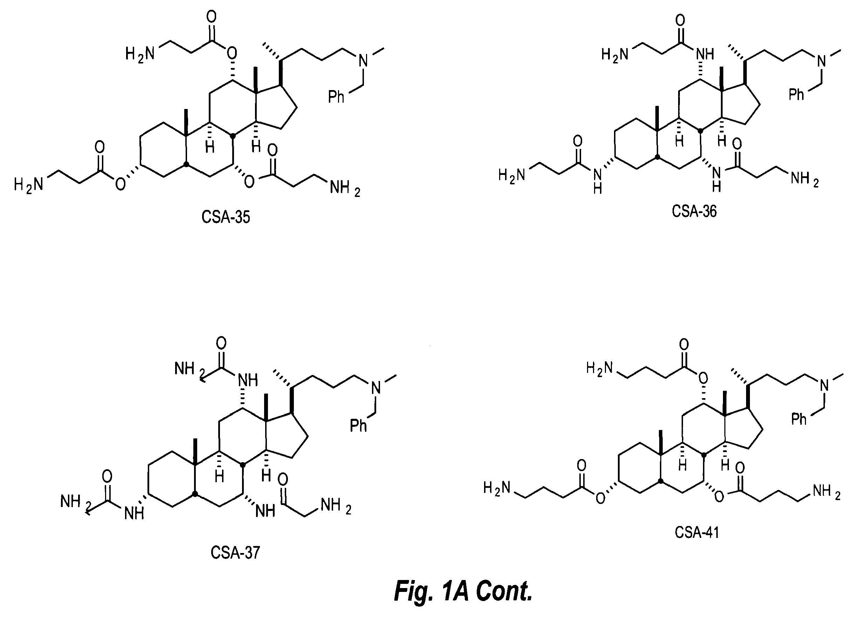

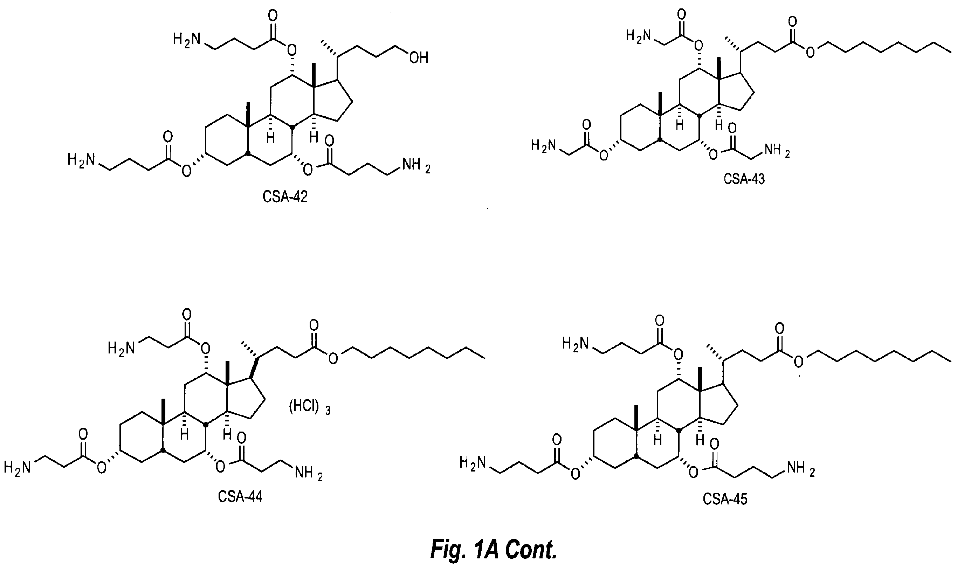

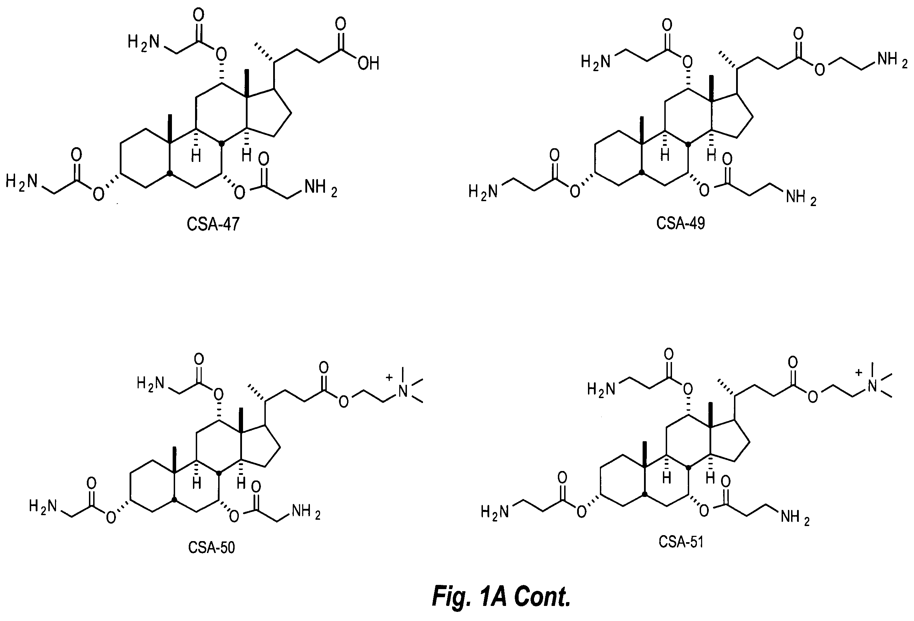

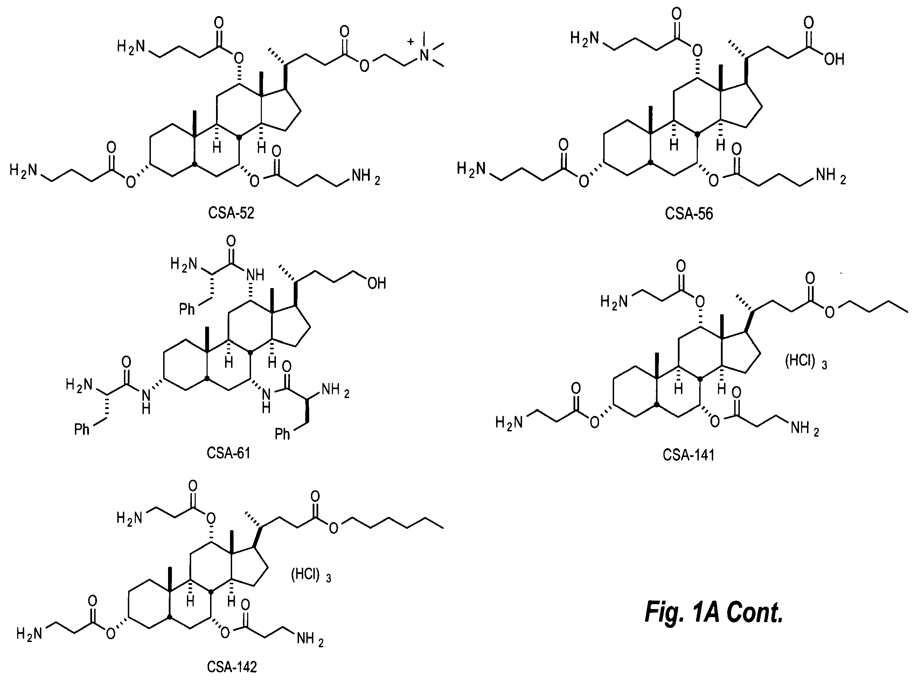

The charged groups are responsible for disrupting the bacterial cellular membrane, and without the charged groups, the ceragenin compound cannot disrupt the membrane to cause cell death or sensitization. An example of a ceragenin compound is shown below as Formula I. As will be discussed in greater detail below, the R groups of Formula I can have a variety of different functionalities, thus providing a given ceragenin compound with specific, different properties. In addition, as will be appreciated by those of skill in the art, the sterol backbone can be formed of 5-member and/or 6-member rings, so that p, q, m, and n may independently be 1 (providing a 6-member ring) or 0 (providing a 5-member ring). 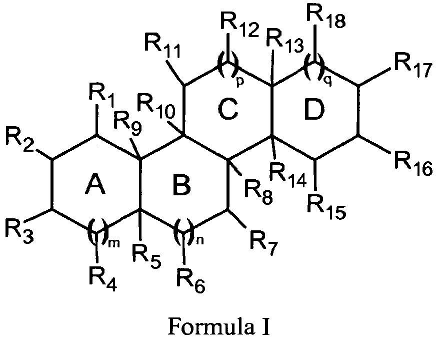 A number of examples of ceragenin compounds of Formula I that can be incorporated into the wash compositions described herein are illustrated in Figures 1A-1B.

Typically, ceragenins of Formula I are of two types: (1) ceragenins having cationic groups linked to the sterol backbone with hydrolysable linkages and (2) ceragenins having cationic groups linked to the sterol backbone with non-hydrolysable linkages.

Ceragenins of the first type can be "inactivated" by hydrolysis of the linkages coupling the cationic groups to the sterol backbone. For example, one type of hydrolysable linkage is an ester linkage. Esters are hydrolyzed in the presence of water and base. Ceragenins of the first type are desirable, for example, where it is preferred that the ceragenins break down so that they do not buildup in the environment.

Similarly, this may also serve as a safety mechanism to prevent or minimize ingestion of the compounds by an end user consuming a meat food product treated with the ceragenin compound. For example, the compound may degrade simply as a result of environmental conditions (e.g., pH) within a matter of weeks. Because the compounds can also be inactivated through cooking, this also serves as another safety mechanism to prevent or minimize their ingestion. Furthermore, the compounds have also been found to be inactivated by lipase enzymes present within the stomach, so that even if one were to ingest residual ceragenin compound, it would be destroyed within the stomach, preventing any buildup within the body of the consumer.

Finally, it has also been found that the concentration of ceragenin required to kill beneficial bacteria residing within the digestive tract of humans is approximately 50 times greater than the concentration required to kill illness causing bacteria such as *Salmonella* and *Campylobacter.* Thus, this characteristic provides yet another level of protection to prevent something akin to an antibiotic flush (i.e., killing essentially all bacteria within the digestive system of a person) if any residual ceragenin compound were somehow ingested through consumption of a meat food product treated with the present wash compositions.

Ceragenins of the second type are not inactivated by hydrolysis. While their stability may be less preferred in the specific context of anti-microbial wash compositions, the use of such ceragenin compounds is within the scope of the present invention. While such ceragenin compounds may not be degraded through environmental conditions that lead to hydrolysis, at least some of these ceragenin compounds may be subject to the other safety features described above (i.e., destruction through cooking, inactivation by action of stomach lipase, and their characteristic of selectively killing illness causing bacteria while posing no threat to beneficial bacteria at a given concentration).

Depending at least in part on the class of ceragenin compound selected, the ceragenin used in the wash compositions described herein may be selected to be shelf stable for days, weeks, months, or even years after the wash composition is prepared. For example, hydrolizable ceragenin compounds can be stabilized by the addition of an acid to the carrier, providing shelf life that is as long as desired (e.g., up to months or perhaps even years). That said, typically, the wash composition may be prepared on site (e.g., at a slaughterhouse or other food processing facility) and stored while the prepared volume is being used (e.g., over a period of a few weeks or months). In some embodiments, as described above, stability characteristics of the ceragenin compound may be specifically configured so that the ceragenin of the wash composition degrades shortly after use (e.g., by selecting a ceragenin compound with hydrolysable linkages), so as to minimize or prevent risk of ingestion by and end user and to minimize risk of build up of such compounds within the environment (e.g., when spent wash composition is discarded)

A number of examples of compounds of Formula I that may be used in the embodiments described herein are illustrated in Figures 1A-1B. Suitable examples of ceragenins with hydrolysable linkages include, but are not limited to CSA-27, CSA-28, CSA-29, CSA-30, CSA-31, CSA-32, CSA-33, CSA-34, CSA-35, CSA-36, CSA-37, CSA-41, CSA-42, CSA-43, CSA-44, CSA-45, CSA-47, CSA-49, CSA-50, CSA-51, CSA-52, CSA-56, CSA-61, CSA-141, CSA-142, and combinations thereof. In a preferred embodiment, a hydrolysable ceragenin compound is CSA-44. Besides being hydrolizable, CSA-44 also has the advantage that degradation products resulting from its inactivation or destruction are compounds that are found within nature and within the body already. This feature is particularly beneficial as there is little if any risk thus associated with ingestion of contemplated concentrations of CSA-44, or with inactivation of CSA-44 within the body of the end user (e.g., through action of lipase), or with inactivation of CSA-44 through cooking (i.e., where the degradation products may themselves be ingested). At least some of the ceragenin compounds other than CSA-44 may also share these same characteristics.

Examples of ceragenins with non-hydrolysable linkages include, but are not limited to, CSA-1 - CSA-26, CSA-38 - CSA-40, CSA-46, CSA-48, CSA-53 - CSA-55, CSA-57 - CSA-60, CSA-90 - CSA-107, CSA-109, CSA-110, CSA-112, CSA-113, CSA-118 - CSA-124, CSA-130 - CSA-139, and combinations thereof. A combination of hydrolysable and non-hydrolysable CSAs may also be employed. Additional details relating to ceragenin compounds are described in section V below.

### II. Anti-Microbial Wash Compositions

In one embodiment, an anti-microbial wash composition for controlling growth of microbes on a slaughtered meat food product is described. The composition includes a fluid carrier and a ceragenin compound dispersed in the carrier. The ceragenin compound has a sterol backbone and a number of cationic groups attached thereto.

In one embodiment, the fluid carrier includes an alcohol. Exemplary alcohols include lower alcohols (e.g., C₁-C₄ alcohols) such as ethanol, propanol, isopropanol, and combinations thereof. One particular example of a carrier includes water, an alcohol, and a surfactant.

The ceragenin compound(s) are included in an amount in a range from 10 ppm by weight to 5000 ppm by weight of the anti-microbial wash composition. The concentration of the ceragenin compound in the wash may be greater than or equal to 10 ppm, 25 ppm, 50 ppm, 100 ppm, 200 ppm, 300 ppm, 500 ppm, and/or less than or equal to 5000 ppm, 2000 ppm, 1000 ppm, 500 ppm, or 300 ppm, or within a range of the foregoing concentrations.

In some embodiments, the wash composition is suitable for performing a carcass rinse in accordance with whole carcass rinse method USDA-FSIS, 2004.

In one embodiment, the cationic groups are attached to the sterol backbone by hydrolysable linkages, which may be ester linkages. Such linkages are generally unstable in the presence of water and can be cleaved by water in a base catalyzed reaction. In order to maintain the stability of the wash composition prior to use, such wash compositions including a hydrolysable ceragenin may also include an acid so that the pH of the wash composition is acidic (e.g., a pH of 6 or less, or a pH of 5.5 or less) and thus stabilized prior to use. Once such a wash composition is applied, the pH will typically increase as a result of basic components present within the application environment (e.g., on the meat food product), leading to destabilization and eventual degradation of the hydrolysable ceragenin compounds.

Whether hydrolysable or non-hydrolysable ceragenin compounds are employed in the wash composition, the selected ceragenin compound(s) may be dispersed in essentially any suitable fluid carrier. In typical embodiments, the fluid carrier will comprise a liquid, although it may also be possible to disperse the ceragenin compound(s) in a gaseous carrier (e.g., air, nitrogen, a noble gas, etc.) which can then be applied to a slaughtered meat carcass or other slaughtered meat food product in order to control microbe growth on the food product. In one embodiment, suitable carriers include, but are not limited to, water, alcohols, oils, organic solvents, organic/aqueous emulsions, and combinations thereof.

Although it may be possible to disperse the ceragenin compound(s) in a thick, viscous carrier such as petroleum jelly, it is preferred that the carrier be of relatively low viscosity (e.g., less than about 100 cps) so that the wash composition can be more easily sprayed onto the food product, or the food product may be dipped into the wash composition. Relatively low viscosity carriers and resulting wash compositions will more easily coat and cover the surface of the meat food product. In one embodiment, the viscosity of the composition is not more than about 10 cps. In another embodiment, the viscosity is not more than about 1 cps (the viscosity of water). Relatively low viscosity wash compositions will more easily drain away under force of gravity from the food product following wash application, are more easily sprayed, and are more easily employed where the food product is immersed or otherwise dipped into a bath of the wash composition.

In one embodiment, the majority (i.e., more than 50%) of the wash composition is comprised of water. In some embodiments, water may comprise the vast majority of the wash composition (e.g., about 75% to about 95% or more by weight)..

In one embodiment, the carrier may include a surfactant to enhance the wetting properties of the composition (i.e., aid in providing full coating and coverage of the surface of the meat food product). Suitable examples of surfactants include, but are not limited to, anionic surfactants (e.g., sodium lauryl sulfate and alkylbenzenesulfonates), cationic surfactants (e.g., CTAB), zwitterionic surfactants (e.g., CHAPS), and nonionic surfactants (e.g., Triton-X series detergents and polyethylene glycol monoalkyl ethers). The anti-microbial compositions described herein can also include one or more non-surfactant additives (e.g., EDTA, phosphonic acids, phosphinic acids, and the like). Such additives can, for example, enhance the wetting properties of the above described surfactants and/or chelate metals (e.g., copper, iron, magnesium, and the like), which may have mild anti-microbial effect.

As described above, in one embodiment, particularly where a hydrolysable ceragenin is included within the wash composition, the carrier further includes an acid. In one embodiment, the acid is added to the carrier in an amount sufficient to reduce the pH of the carrier with the ceragenin compound dispersed therein to a pH of about 6or less, or about 5.5 or less. Suitable examples of acids that can be used to adjust the pH of the carrier include, but are not limited to, acetic acid, peracetic acid, citric acid, ascorbic acid, hydrochloric acid, sulfuric acid, nitric acid, and combinations thereof. In a specific embodiment, the acid is acetic acid added to the carrier at a concentration in a range from about 0.01 % to about 1 % (v/v) (e.g., about 0.5% (v/v)). While peracetic acid may be used, this may be less preferred as peracids are strong oxidizing agents which can alter the quality characteristics of the meat food product. Thus, if an acid is present, it may be preferred to employ an acid other than a peracid, or to include the peracid at a level that is significantly below that typically used where the peracid is included for its oxidizing ability.

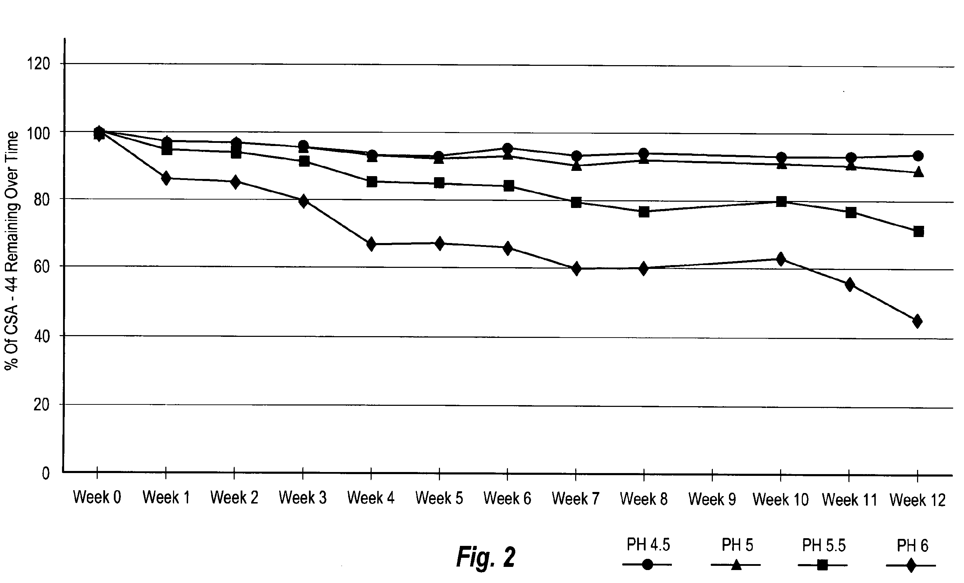

Figure 2 and Table 1 illustrates the stability of CSA-44, a preferred hydrolysable ceragenin, in aqueous solution as a function of pH. CSA-44 includes three ester-linked terminal amine groups attached at the R₃, R₇, and R₁₂ positions of Formula I. CSA-44 is illustrated in Figure 1A. As can be seen from Figure 2, the stability of CSA-44 is greatly enhanced at lower pH. For example, at pH 6, only about 45% of the CSA-44 was still present after 12 weeks in aqueous solution. In contrast, at pH 5.5 over 72% was still present after 12 weeks. At pH 5 and 4.5 the stability was even better, with about 90% and 95% remaining after 12 weeks, respectively.

**Table 1 - CSA-44 Stability as a function of pH**

| Week | pH 6 | pH 5.5 | pH 5 | pH 4.5 |
|---|---|---|---|---|
| Week 0 | 100 | 100 | 100 | 100 |
| Week 1 | 86.3 | 94.8 | 97.5 | 97.2 |
| Week 2 | 85.5 | 94.6 | 97.4 | 97.0 |
| Week 3 | 80.3 | 92.3 | 96.4 | 96.7 |
| Week 4 | 67.6 | 86.3 | 94.3 | 94.1 |
| Week 5 | 68.1 | 86.0 | 94.2 | 93.0 |
| Week 6 | 66.9 | 85.5 | 94.9 | 96.8 |
| Week 7 | 60.6 | 80.9 | 91.8 | 94.5 |
| Week 8 | 60.9 | 77.8 | 93.8 | 95.6 |
| Week 9 | N/A | N/A | N/A | N/A |
| Week 10 | 64.0 | 81.2 | 92.6 | 94.7 |
| Week 11 | 56.3 | 78.2 | 92.1 | 94.6 |
| Week 12 | 45.4 | 72.4 | 90.1 | 95.2 |

As such, in one embodiment, the carrier has a pH in a range of 2 to 5.5. In another embodiment, the carrier has a pH less than 5.5, 5, 4.5, 4, 3.5, or 3 and greater than 1, 1.5, 2.0, or 2.5 or any range of the foregoing upper and lower pHs. At such acidic pHs, the ceragenin compound may have a half-life of over 2 months, over 6 months, over 1 year, or over 2 years when dispersed in an aqueous carrier, prior to use (e.g., during any storage after manufacture and before use).

Of course, in embodiments where extended shelf life is not required, the pH may be substantially higher (e.g., about 6, 6.5, or 7). For example, the wash composition may be prepared and used relatively quickly, so that extended shelf-life is not required. Such embodiments may not require the addition of an acid to the carrier. Such compositions may also degrade even more quickly following application due to environmental conditions, as the pH may rise more quickly absent the presence of any acid (or a reduced concentration of acid).

Advantageously, the hydrolysable ceragenin compounds are designed to break down relatively quickly if the pH environment of the ceragenin compounds is raised to about pH 6, 6.5 or greater. In embodiments including little or no acid, the pH of the environment may be even higher, given little or no acid is available to counter the pH characteristics of the environment. With respect to acid containing wash compositions, one way that the pH environment of the ceragenin compounds can be changed is to apply the composition to a surface capable of raising the pH environment of the ceragenin compound to a pH greater than 6, 6.5, or 7. This can allow the ceragenin compounds described herein to effectively disinfect a slaughtered meat carcass or other meat food product while minimizing or preventing any risk of ingestion by an end consumer or build up of the ceragenin in the environment (e.g., upon disposal of the spent wash composition). In one embodiment, the ceragenin compound has a half-life of less than 1 day, less than 5 days, less than 10 days, less than 20 days, or less than 40 days once applied to a given meat food product.

For example, the inventors in the present case have found that CSA-44 has a half-life of about 37 days at pH 7. However, the half-life of the ceragenin compounds described herein is likely to be shorter at higher pH. In addition, even though the ceragenin compounds described herein are not metabolized in the process of killing microbes, they are effectively inactivated when they are absorbed into the membrane of a microbe. As a result the effective half-life of hydrolysable ceragenin compounds described herein (e.g., CSA-44) are likely to be substantially shorter in a microbe-contaminated environment. Furthermore, there are additional guards of safety to prevent ingestion or harm to the end user as described above (i.e., destruction or inactivation through cooking, destruction or inactivation as a result of lipase enzymes within the stomach, and the fact that the employed concentrations are too low to kill beneficial bacteria within the intestines or other digestive system areas even if ingested). Finally, the products resulting from inactivation or destruction of the ceragenin, at least in the case of CSA-44, are compounds that are normally found within the body anyway.

In one embodiment, the carrier may include a buffer. Such a buffer may be present in a buffer concentration of less than 1 molar ("M"), 500 millimolar ("mM"), 100 mM, 75 mM, 50 mM, 25 mM, 10 mM, or 5 mM or less. In another embodiment, the carrier is substantially unbuffered. The buffering capacity of the carrier can affect the ability of a slaughtered meat carcass or other meat food product surface to raise the pH of the ceragenin compound after it is applied to the surface.

In one embodiment, the ceragenin compound may have a structure as shown in Formula I. In Formula I, at least two of R₃, R₇, or R₁₂ may independently include a cationic moiety attached to the Formula I structure via a hydrolysable (e.g., an ester) or non-hydrolizable linkage (e.g., an ether O-heteroatom linkage). Optionally, a tail moiety may be attached to Formula I at R₁₇. The tail moiety may be charged, uncharged, polar, non-polar, hydrophobic, amphipathic, and the like.

Suitable examples of ceragenin compounds of Formula I that have hydrolysable linkages include, but are not limited to, CSA-27, CSA-28, CSA-29, CSA-30, CSA-31, CSA-32, CSA-33, CSA-34, CSA-35, , CSA-36, CSA-37, CSA-41, CSA-42, CSA-43, CSA-44, CSA-45, CSA-47, CSA-49, CSA-50, CSA-51, CSA-52, CSA-56, CSA-61, CSA-141, CSA-142, and combinations thereof (see Figure 1A). Preferred hydrolysable ceragenin compounds of Formula I include one or more of CSA-32, CSA-33, CSA-34, CSA-35, CSA-41, CSA-42, CSA-43, CSA-44, CSA-45, CSA-47, CSA-49, CSA-50, CSA-51, CSA-52, CSA-56, CSA-141, CSA-142, and combinations thereof. CSA-44 is a particularly preferred hydrolysable ceragenin compound of Formula I.

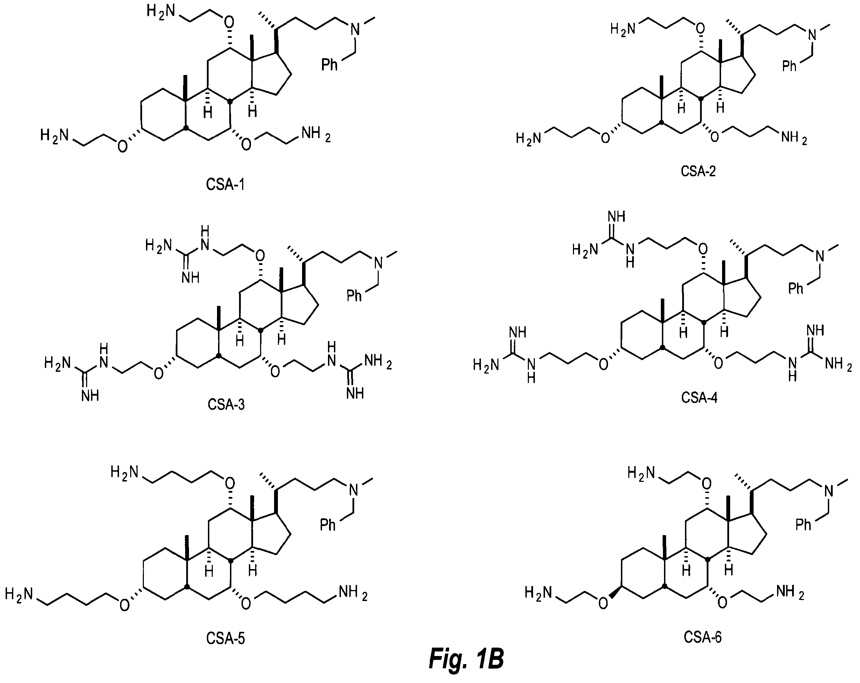

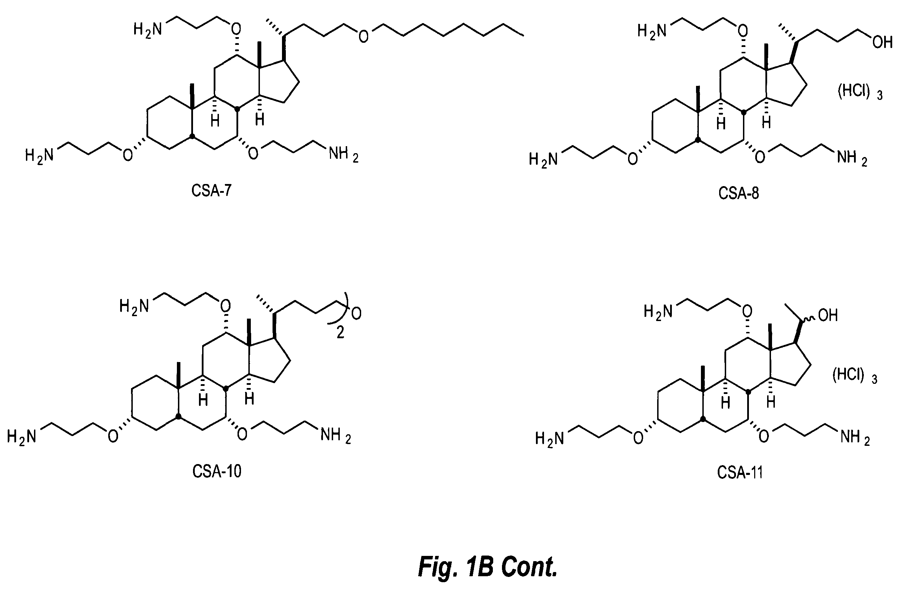

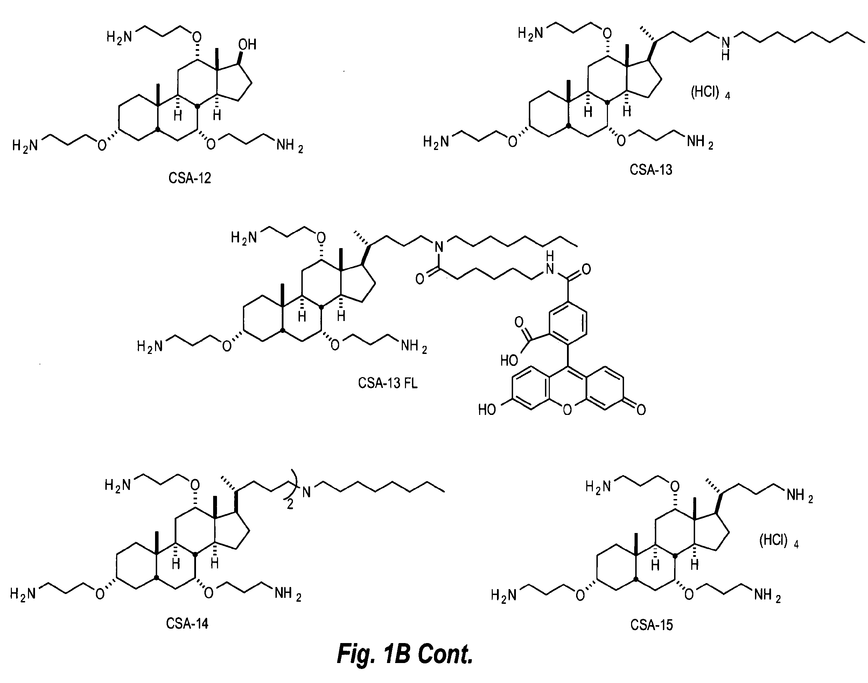

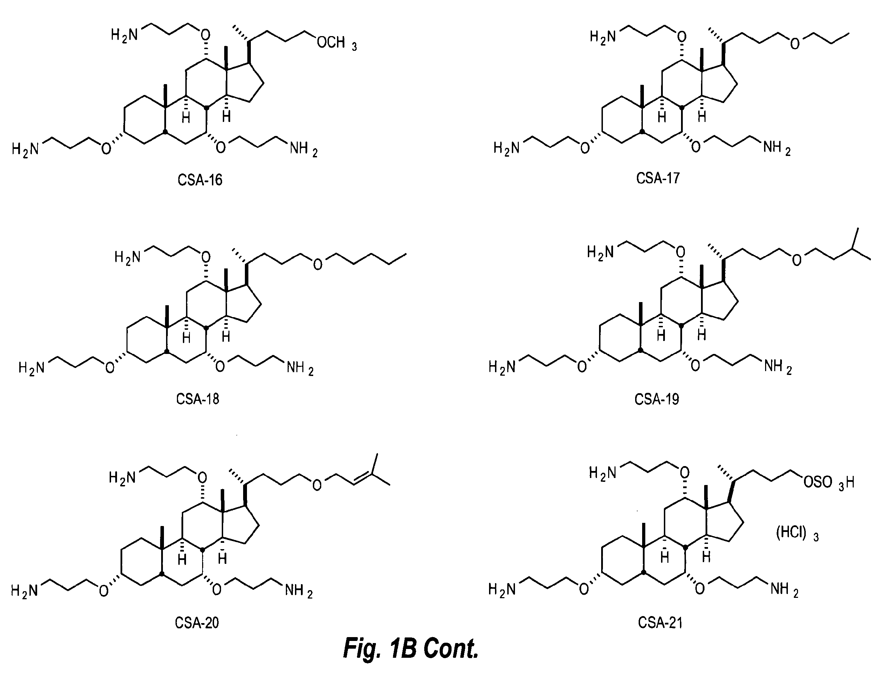

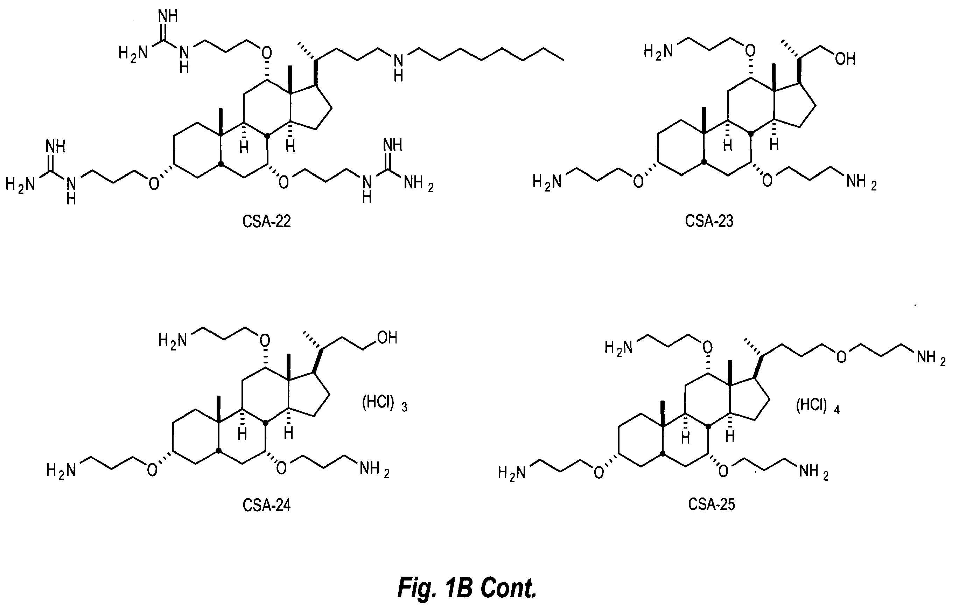

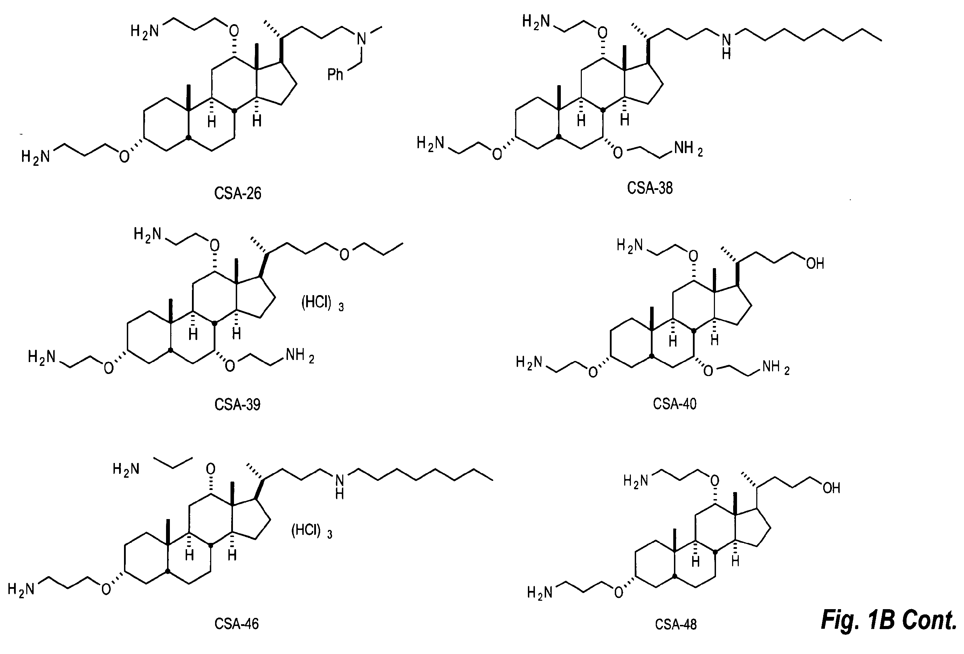

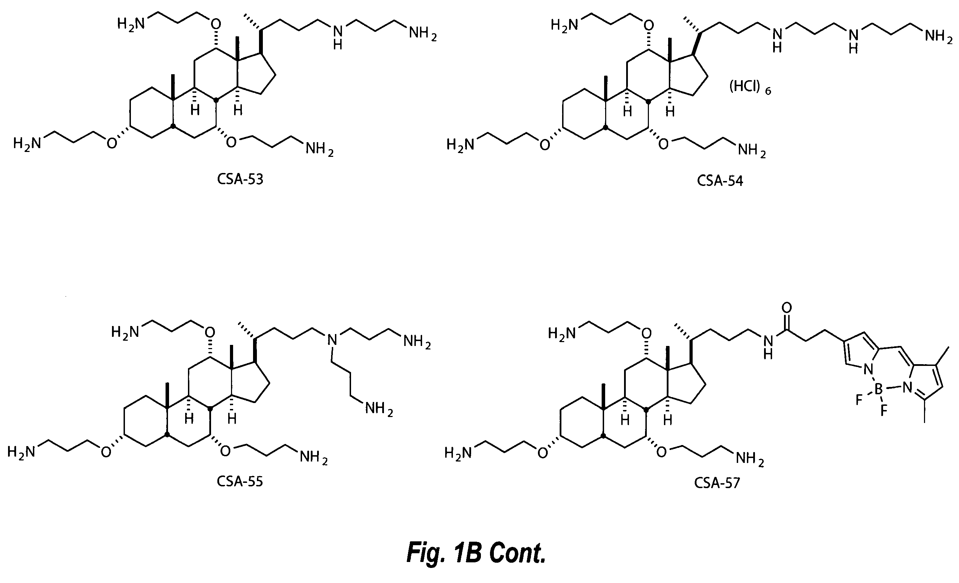

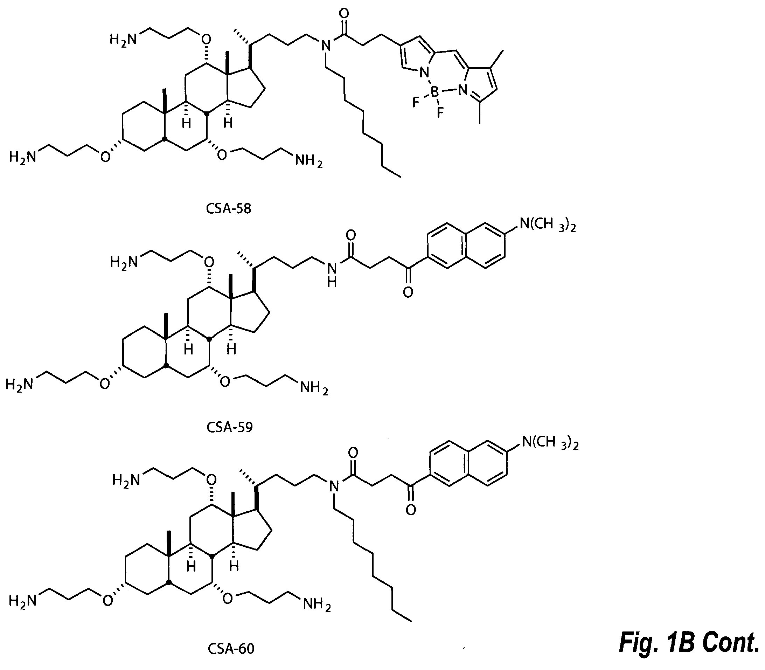

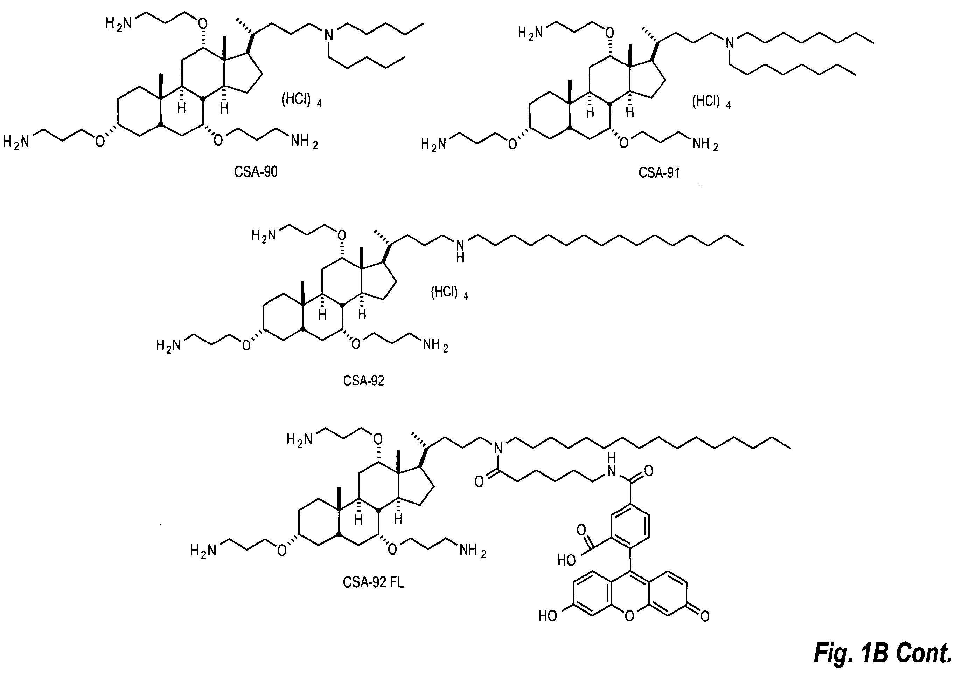

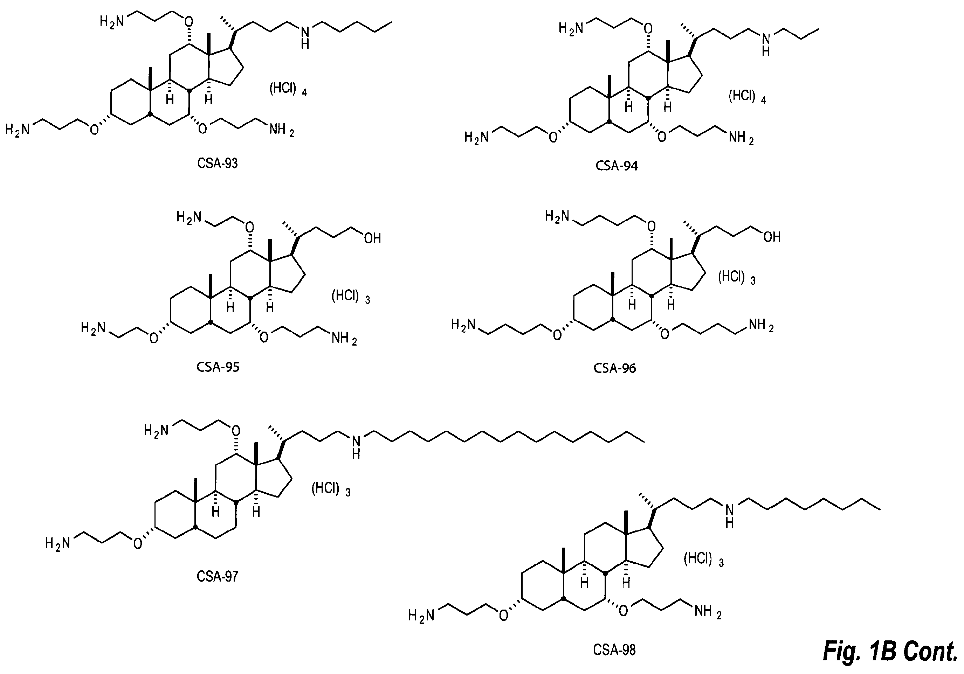

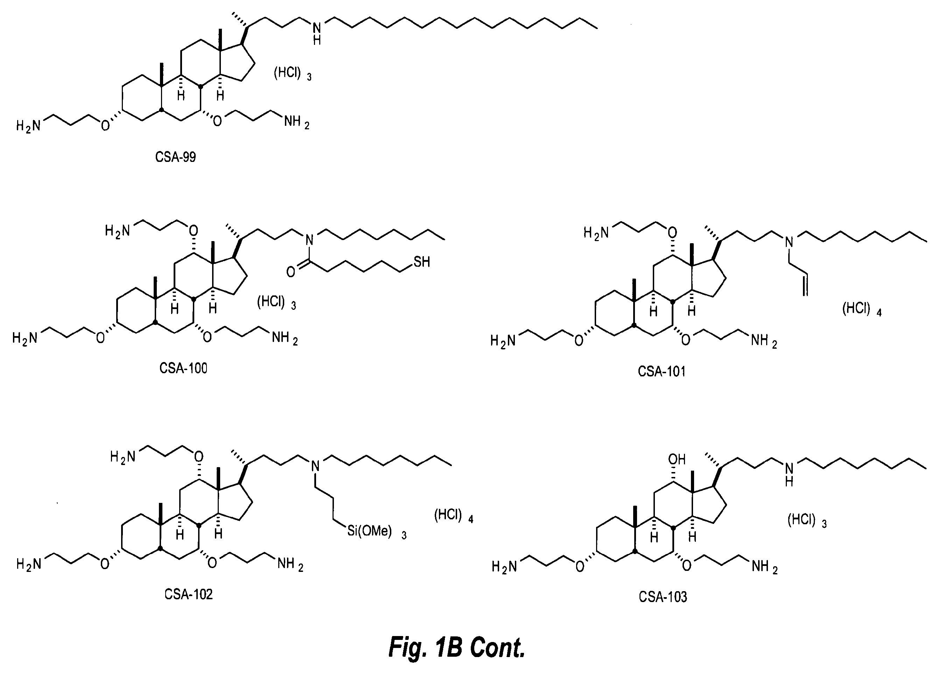

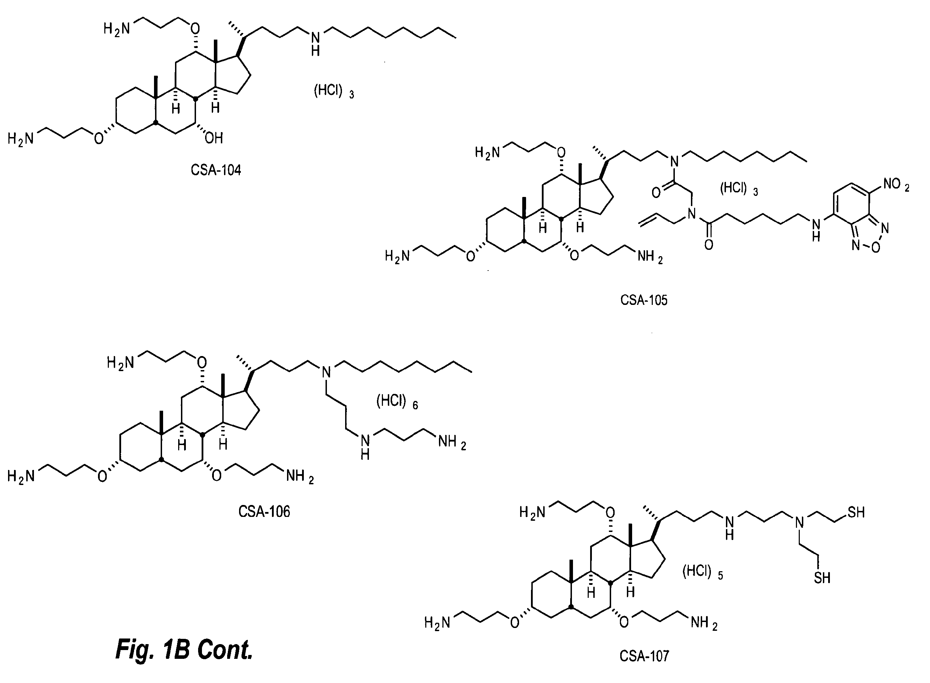

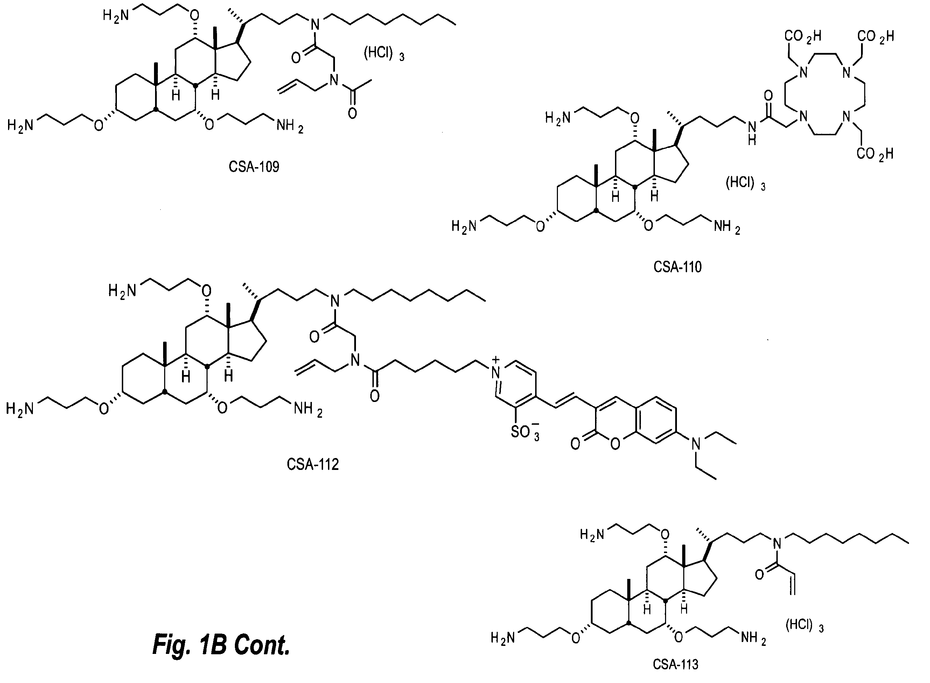

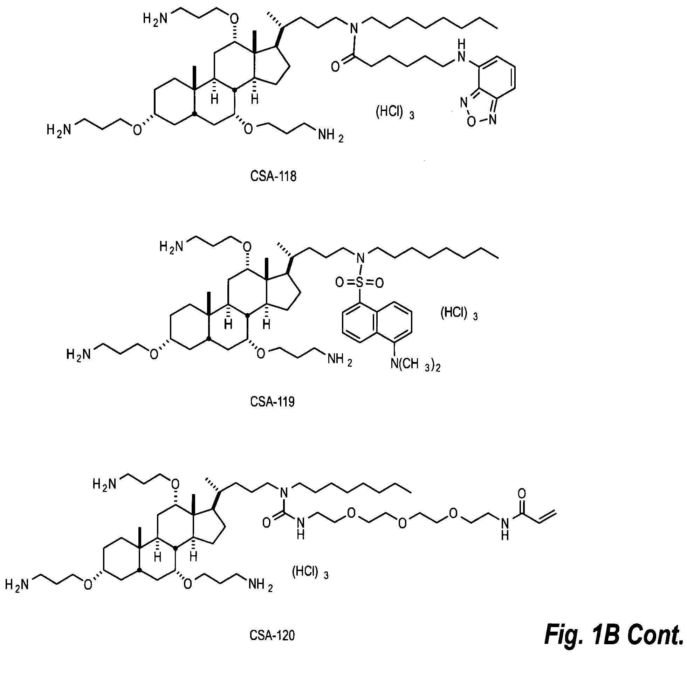

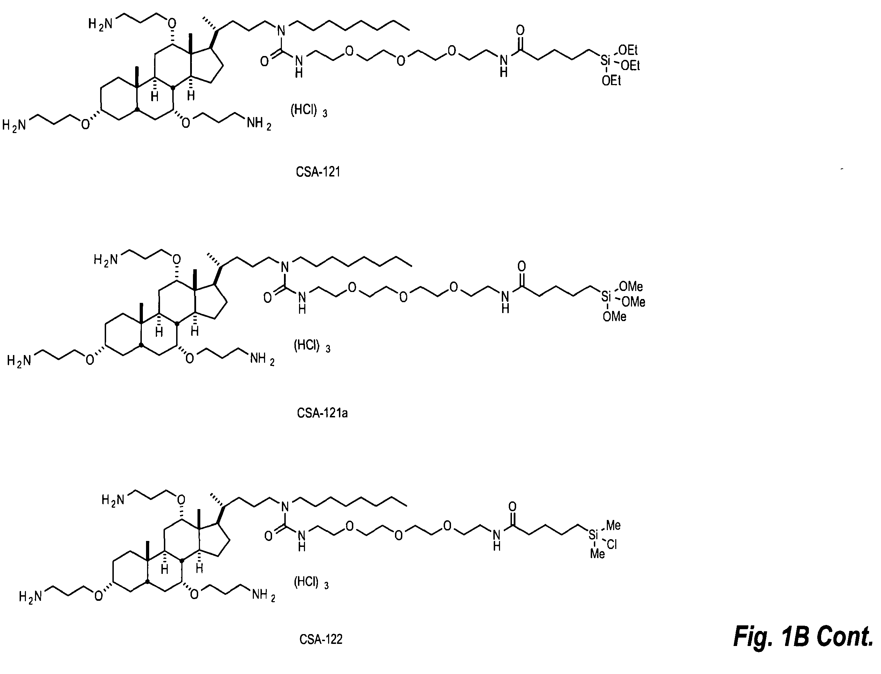

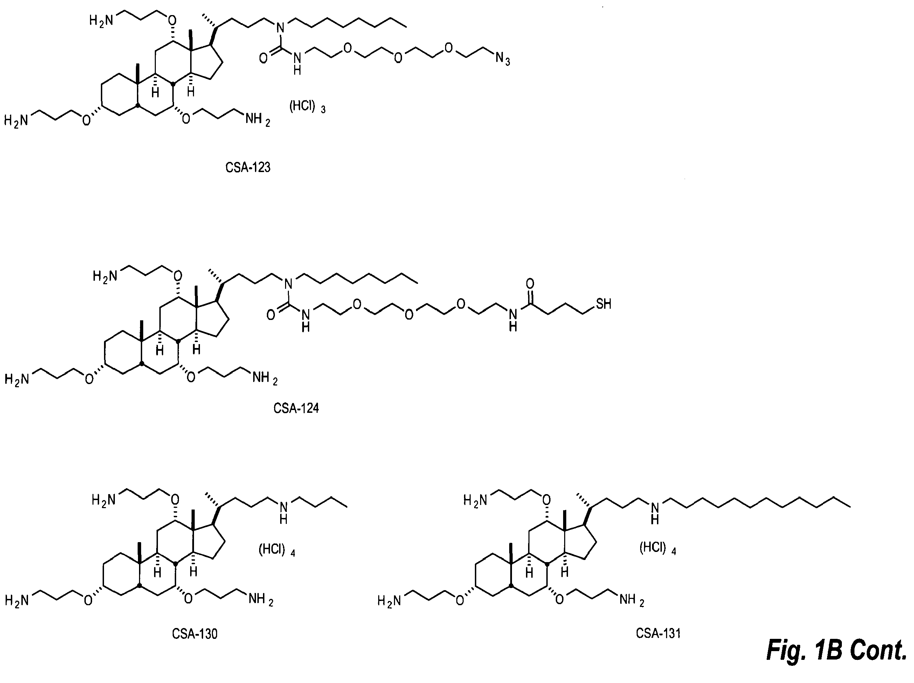

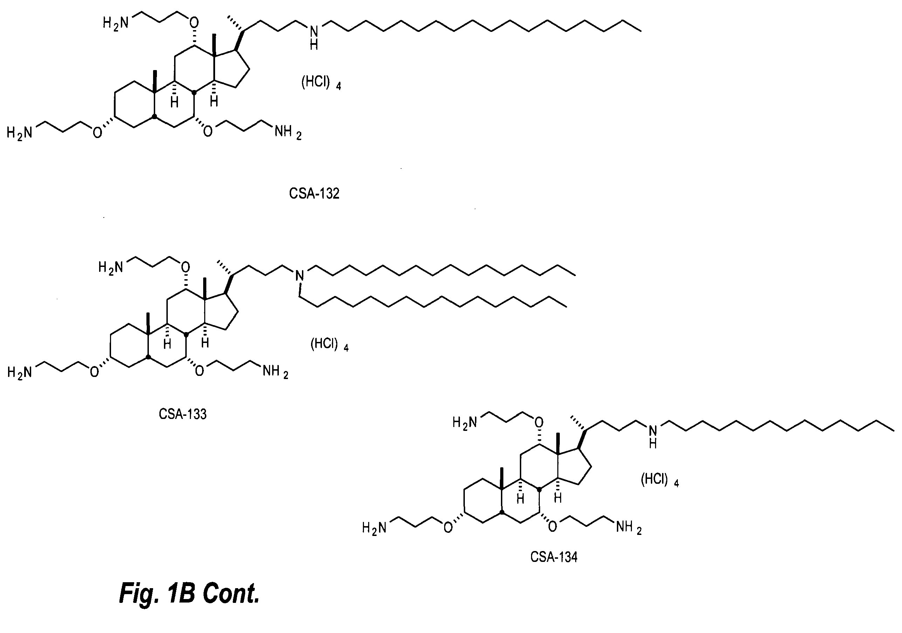

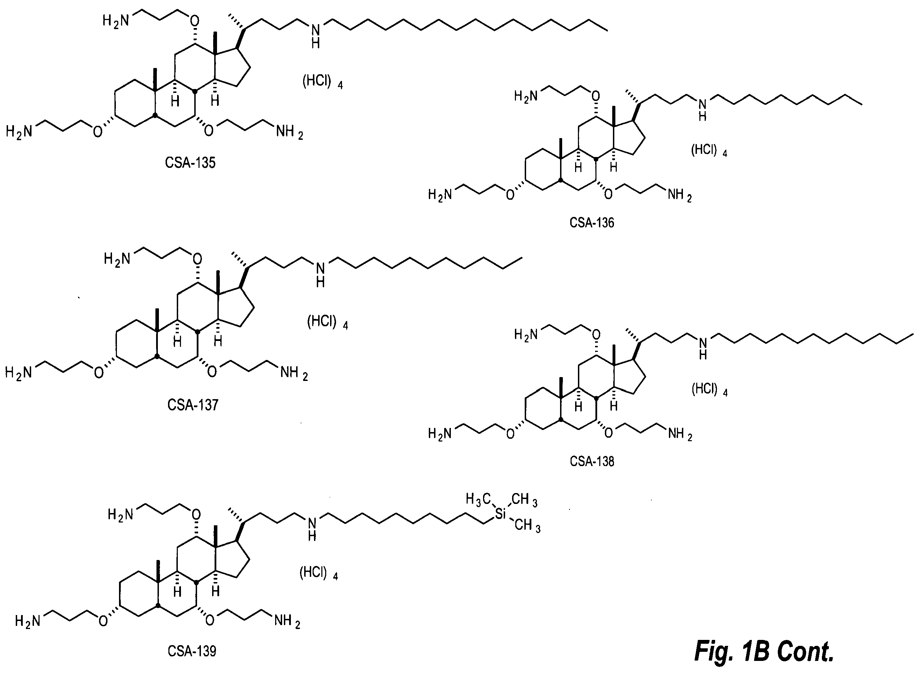

Examples of ceragenin compounds of Formula I that have non-hydrolysable linkages include, but are not limited to, CSA-1 - CSA-26, CSA-38 - CSA-40, CSA-46, CSA-48, CSA-53 - CSA-55, CSA-57 - CSA-60, CSA-90 - CSA-107, CSA-109, CSA-110, CSA-112, CSA-113, CSA-118 - CSA-124, CSA-130 - CSA-139, and combinations thereof (see Figure 1B). In one embodiment, a combination of hydrolysable and non-hydrolysable CSAs may be employed.

The anti-microbial activity of the ceragenin compounds can be affected by the orientation of the substituent groups attached to the backbone structure. In one embodiment, the substituent groups attached to the backbone structure are oriented on a single face of the ceragenin compound. Accordingly, each of R₃, R₇, and R₁₂ may be positioned on a single face of Formula I. In addition, R₁₇ may be positioned on the same single face of Formula I.

### III. Methods Of Killing Microbes On A Meat Food Product

According to one aspect, the present invention is directed to methods of killing and controlling growth of microbes on a meat food product, such as a slaughtered meat carcass. The method includes (1) applying the above described anti-microbial wash compositions to a surface of a meat food product that may be exposed to one or more microbes and (2) killing one or more types of microbes on the surface of the food product. The anti-microbial wash compositions may be effective in killing multiple types of microbes (e.g., a wide variety of different bacterial strains). As described above, the ceragenin compound has a sterol backbone and a number of cationic groups attached thereto and is dispersed within a fluid carrier.

The anti-microbial wash composition may be applied to any of various meat food products. In one embodiment, the anti-microbial wash composition may be applied to a slaughtered meat carcass, a slaughtered (i.e., dead) meat product, or other animal derived meat food product. For example, the wash composition may be applied to a slaughtered meat carcass, or to the meat product once the meat food product has been removed from the other portions of the animal carcass (e.g., the wash composition may be applied to ground beef, ground turkey, ground sausage, steaks, or other cuts of meat).

The wash composition may be applied to any contemplated animal livestock, such as poultry carcasses (e.g., chicken and turkey), beef carcasses, bison carcasses, lamb carcasses, sheep carcasses, pork carcasses, fish carcasses, crustacean carcasses (e.g., crab and lobster), or any other animal carcasses. The wash composition may also be applied to carcasses of wild game, such as deer carcasses, elk carcasses, bear carcasses, duck carcasses, geese carcasses, rabbit carcasses, etc.). As will be apparent in light of the above disclosure, the wash composition may also be applied to meat products from those animals described above, or any other animal once the meat has been separated from the remainder of the animal carcass. For example, any of the above animal meat products may be cut or ground, and the wash composition may be applied to the cut or ground meat product. Alternative to grinding, the animal meat product may be otherwise cut, and the cut meat product may be treated with the wash composition. Examples of such cut meat products include, but are not limited to, steaks, other non-ground cuts of meat, poultry breast (e.g., turkey or chicken breast), poultry thighs, poultry wings, or poultry legs (i.e., drumsticks). Other examples of meat products that may be so treated will be apparent to one of skill in the art in light of the present disclosure.

In one embodiment, the wash composition may be applied more than once, for example, at different stages of processing the meat food product. For example, a first application of the wash composition may be done to the animal carcass soon after slaughter, while another application may be done later, once meat has been removed from the carcass and processed into another form (e.g., ground meat, sausage, hot dogs, a specific non-ground meat cut, etc.). By way of another example, two applications of a wash composition may be made, with the concentration of the ceragenin compound in the first wash composition being different than that of the second wash composition. For example, a first application may be at a higher ceragenin concentration than the second application to provide an initial "hit" followed by a second dosing.

In one embodiment, the wash composition is applied at a particular stage during processing of the food product only once. For example, peracetic acid wash compositions may require as many as 3 applications to an animal carcass in order to be effective. The present ceragenin containing wash compositions can be effective in as little as a single application. Of course, additional applications may be employed, if desired.

In one embodiment, the ceragenin compound in the anti-microbial wash composition may remain capable of continuing to kill microbes on the surface of the food product for at least one day after the application, at least 5 days after the application, or at least 10 days after the application. At the same time, the ceragenin compound may also degrade due to environmental conditions within a matter of weeks. This provides the treated food product with some level of prospective resistance to microbial contamination, while also ensuring that the ceragenin is not ingested by the end user.

For example, upon application, microbes present on the food product are killed. In addition, residual amounts of the ceragenin compound(s) of the wash composition may remain on the surface of the food product if not washed away. Such residual ceragenins remain active, and able to kill microbes should a microbe be transferred to the surface of the food product or otherwise begin to grow on the surface of the food product (i.e., a contamination event). Thus, the residual ceragenin is capable of remaining on the food product surface in an active state, ready to kill any microbe that should begin to grow thereon.

At the same time, a hydrolysable ceragenin begins to degrade immediately after application, so that there is little if any risk of ingestion by the end user at the time of consumption of the meat food product, particularly as any residual ceragenin compound is destroyed by cooking. As a further protective characteristic, even if some residual ceragenin were not destroyed by environmental conditions or cooking, at least some of the ceragenin compounds (e.g., CSA-44) are destroyed by lipase enzymes found in the stomach. Finally, even if some ceragenin were to survive through the stomach, the concentration of ceragenin required to kill beneficial bacteria found within the intestines and other digestive tract locations is significantly higher (e.g., about 50 times higher) than that required to kill illness causing bacteria, such as *Salmonella* and *Campylobacter.* Thus, the concentration of ceragenin compound selected in the wash compositions is sufficient to kill illness causing bacteria without being high enough to kill beneficial bacteria. Each of these features thus represents a layer of safety protection to minimize or prevent any undesirable effects associated with ingestion or use of the wash compositions. Where two or more such safety features are provided by a given ceragenin compound, there is little if any risk of any undesirable side effects to an end user. CSA-44 is preferred as providing every one of these safety features.

Another advantageous characteristic associated with the ceragenin containing wash compositions is their effectiveness in killing biofilm type bacteria, in addition to planktonic bacteria. Many other anti-microbial agents, including nearly all or all antibiotics are not capable of effectively killing bacteria present as a biofilm. This is believed to be due to the fact that such antibiotics attack enzymes associated with growth of bacteria. Biofilm bacteria are believed to be in something of a sessile state so that the targeted growth enzymes are not being produced. This results in the biofilm bacteria surviving an antibiotic treatment, meaning they are capable of continuing to pose a pathogenic threat even after such antibiotic treatment. The ceragenin compounds operate through a different mechanism, which is effective against both planktonic and biofilm type bacteria.

The inventors have found that the ceragenin compounds described herein can be applied to a variety of fresh meat food products to kill bacteria and the like and thereby prevent or delay spoilage and/or prevent transmission of food borne illness. To great advantage over existing anti-microbial wash compositions (e.g., peracetic acid washes or chlorine containing washes), at the concentrations needed for food application, the ceragenin compounds described herein are tasteless, odorless, safe for human consumption (although ingestion is unlikely as described above), and do not negatively affect the appearance (e.g., color), texture, taste, smell, and other quality characteristics of the meat or other food product.

The ceragenin compounds are selective in that they are able to attack a wide variety of dangerous illness causing microbes on the meat food product surface without any significant effect on the meat itself. This is in contrast to peracid wash compositions, which while more or less effective in killing bacteria present on the slaughtered meat carcass, are not selective, tending to oxidize not only the bacteria, but the meat itself as well. In addition, such peracids may not be particularly stable on the meat product because they readily react with the meat itself where no bacteria are present, and thus provide little or no prospective anti-bacterial protection to the meat product once the treatment is completed. This difference allows a ceragenin treated food product to actually fight off a new bacterial contamination event because of residual ceragenin compound present on the food product surface, even after treatment is completed.

The present invention also relates to the products produced from the methods described herein. The products treated using the methods described herein can be made safer for consumption. In addition to having a lower microbial population, the products are more resistant to microbial colonization. This resistance is achieved with very low concentrations of CSA on the meat. Unlike traditional washes such as acid washes, the methods of the present invention produce products that resist microbial colonization over extended periods of time (e.g., 5, 10, 15 , 20, 30 days) as compared to products produced using traditional methods. Thus, the products produced using these methods are unique as compared to products produced using traditional methods.

### IV. Examples

### Example 1

A study was performed to determine the effectiveness of an anti-microbial rinse composition including relatively low concentrations of a ceragenin compound in controlling growth of bacteria and extending shelf-life of a poultry food product. Three different wash compositions were prepared. Aqueous wash composition 1 (the control) included no ceragenin compound or other anti-microbial agent. Aqueous wash composition 1 was simply tap water. Aqueous wash composition 2 included a 50 ppm ceragenin compound concentration by weight in tap water, and had a pH of 6.5. Aqueous wash composition 3 included a 100 ppm ceragenin compound concentration by weight in tap water, and had a pH of 6.5. The ceragenin compound employed was CSA-44. Poultry carcasses (chicken carcasses) were dipped (e.g., immersed) for 30 seconds into the given wash composition and mechanically agitated to mimic the action of a finishing chiller used in commercial processing. After the 30 second application time, the carcasses were immediately vacuum packaged and stored in a refrigerator at 4°C. Three carcasses from each treatment were tested every third day beginning at day 0 and ending at day 21 to monitor their associated levels of microorganisms.

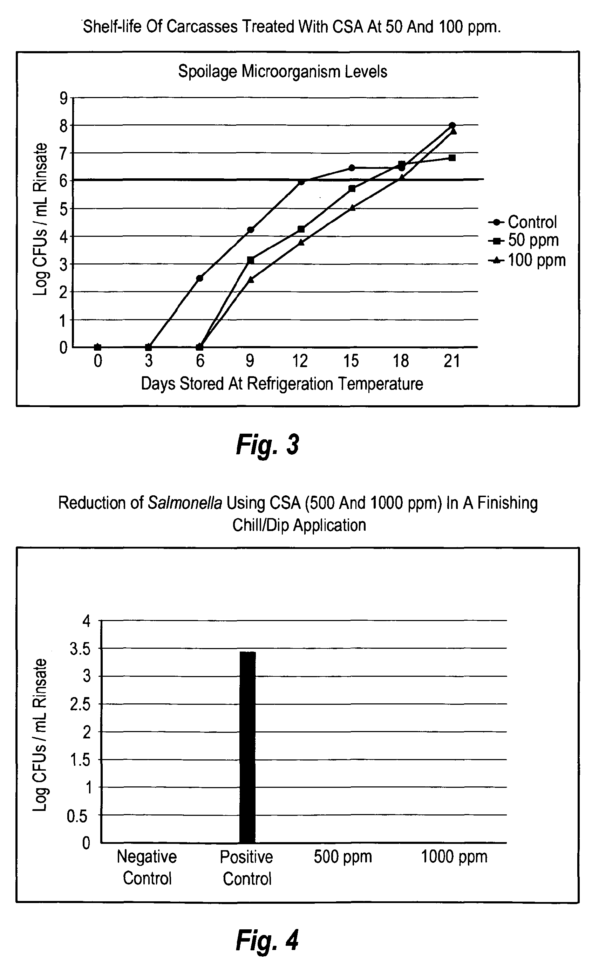

The results are presented in Figure 3. Poultry is considered to be spoiled when it reaches a level of 10⁶ Colony Forming Units ("CFUs")/ml of spoilage microorganisms in the rinsate. The control, i.e., poultry carcasses treated with wash composition 1, reached this limit on day 12. By day 15, the poultry carcasses treated with wash compositions 2 and 3 still had not reached this limit. By day 18, the poultry carcasses treated with wash composition 2 had exceeded this limit with a value of about 10^{6.5} CFUs/ml. By day 18, the poultry carcasses treated with wash composition 3 had just reached the 10⁶ CFUs/ml limit. Thus, even with a relatively low ceragenin compound concentration (e.g., 50 ppm or 100 ppm), significant increases in shelf-life (e.g., more than 3 days and 6 days, respectively) were achieved relative to the use of no anti-microbial agent.

By way of comparative example, shelf life-extension characteristics of wash compositions including peracetic acid were also tested. Treatment with wash compositions including 100 ppm peracetic acid showed no extension of shelf-life relative to a control wash composition including no anti-microbial agent at all. Thus, the use of ceragenin compound containing wash compositions may be characterized by a 3 to 6 day increase in the shelf-life of a poultry carcass.

It is also noted that no detectable changes in quality characteristics of the meat of the poultry carcasses were observed as a result of application of wash compositions 2 and 3. In other words, there were no changes to color, texture, taste, or smell, as a result of application of the ceragenin wash compositions. This is in contrast to treatment with peracid (e.g., peracetic acid) wash compositions, which result in changes to at least color and smell of the product.

### Examples 2-3

Example 2 was performed to determine the effectiveness of an anti-microbial wash composition including a ceragenin compound in controlling growth of *Salmonella* bacteria by fighting off a *Salmonella* inoculation. Example 3 was similarly performed to determine the effectiveness of the wash composition in controlling growth of *Campylobacter* bacteria by fighting off a *Campylobacter* inoculation. Examples 2 and 3 simulate the effectiveness of the present anti-microbial wash compositions to kill *Salmonella* and *Campylobacter* on a poultry carcass where the poultry carcass has become contaminated with *Salmonella* bacteria or *Campylobacter* bacteria.

A total of 15 poultry carcasses (chicken carcasses) were sampled for these tests. The 15 poultry carcasses were divided into five groups of three each. Three carcasses were left untreated to serve as a negative control in order to observe natural levels of bacteria present on the carcass. The remaining 12 carcasses were then inoculated with 1 mL of *Salmonella* and 1 mL of *Campylobacter.* The carcasses were allowed to dry for 20 minutes in order for the bacteria to adhere to the surface of the poultry carcasses. One group of three of the inoculated poultry carcasses, designated the positive control, were then rinsed with a wash composition including no anti-microbial agent to determine the level of bacteria after inoculation.

One group of three inoculated poultry carcasses was dipped one by one into 3 gallons of an aqueous wash composition including a ceragenin concentration (CSA-44) of 500 ppm by weight. Each carcass was withdrawn after 30 seconds. Another group of three inoculated poultry carcasses was dipped one by one into 3 gallons of an aqueous wash composition including a ceragenin concentration (CSA-44) of 1000 ppm by weight. Each carcass was withdrawn after 30 seconds. The fifth group of three inoculated poultry carcasses was dipped one by one into a comparative proprietary non-CSA wash composition. Each of the carcasses was then rinsed, and the rinsate was collected to determine the levels and types of bacteria from each group. While the carcasses treated with the ceragenin wash compositions were "slick" following treatment (similar to a product treated with a surfactant), there were no observable changes in quality characteristics of the meat of the poultry carcasses following treatment. In other words, there were no changes to color, texture, taste, or smell, as a result of application of the ceragenin wash compositions. This is in contrast to treatment with peracid (e.g., peracetic acid) wash compositions, which result in changes to at least color and smell of the product.

Figure 4 shows the results for *Salmonella* bacteria. The negative control showed no detectable *Salmonella* bacteria. The positive control showed a level of nearly 10^{3.5} CFUs/mL of *Salmonella* in the rinsate. Both groups treated with wash compositions including 500 ppm and 1000 ppm of ceragenin compound respectively, showed no detectable level of *Salmonella* bacteria. In other words, the wash composition including 500 ppm ceragenin compound killed 100% of *Salmonella* bacteria present. The wash composition including 1000 ppm ceragenin compound performed similarly.

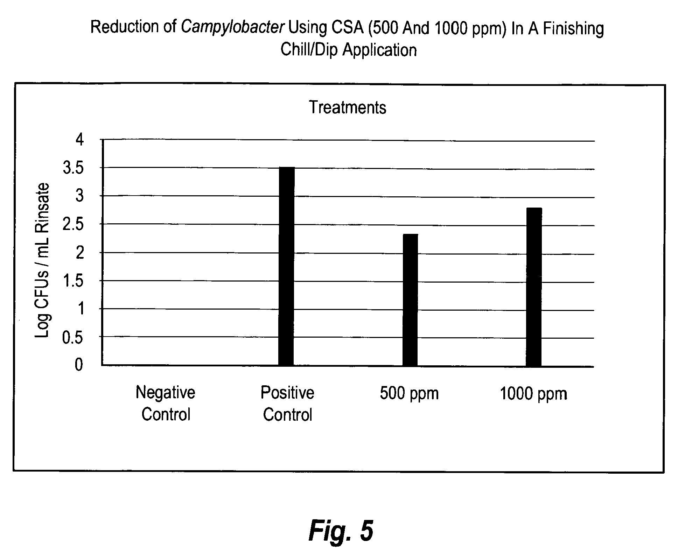

Figure 5 shows the results for *Campylobacter* bacteria. The negative control showed no detectable *Campylobacter* bacteria. The positive control showed a level of 10^{3.5} CFUs/mL of *Campylobacter* in the rinsate. The group treated with a wash composition including 500 ppm of ceragenin compound showed a level of about10^{2.3} CFUs/mL of *Campylobacter* in the rinsate, which represents a 1.2 log reduction. In other words, the treatment was effective in killing 93.7% of the *Campylobacter* bacteria. The group treated with a wash composition including 1000 ppm of ceragenin compound showed a level of about 10^{2.8} CFUs/mL of *Campylobacter* in the rinsate, which represents a 0.8 log reduction. In other words, the treatment was effective in killing 80% of the *Campylobacter* bacteria.

*Campylobacter* and *Salmonella* do not respond identically to different antimicrobials. Because the 1000 ppm treatment showed results that were no more effective on *Campylobacter* than the 500 ppm treatment, it is believed that a threshold may have been reached, so that no greater reductions in *Campylobacter* may be observed at CSA concentrations above about 500 ppm.

It is important to note that the inoculation level of Example 3 was significantly higher than would be naturally found or would be likely to occur as a result of a contamination event. As a result, it is likely that the wash compositions including 500 ppm to 1000 ppm ceragenin compound would eliminate essentially all *Campylobacter* and *Salmonella* present on a poultry carcass. In addition, increasing the dip time to more than 30 seconds might likely result in greater kill rates for *Campylobacter*.

Testing was also performed relative to the ability of a peracetic acid wash composition to kill *Salmonella* and *Campylobacter.* While the peracetic acid wash was effective in reducing the presence of *Salmonella* and *Campylobacter* bacteria, the use of such peracetic acid wash compositions (e.g., 100 ppm) also led to undesirable changes in the quality characteristics of the meat. Thus, the tested ceragenin containing wash compositions show equal or better effectiveness as compared to peracetic acid wash compositions, without the negative effects on color, smell, taste, and texture associated with oxidizing wash compositions.

### Examples 4-5

Examples 4 and 5 describe treatments of processed broiler carcasses noculated with approximately 10^6 *Salmonella* and *Campylobacter*, respectively. Examples 4 and 5 illustrate the time dependence of the effectiveness of ceragnin compounds. Specifically, ceragenin compounds show high levels of activity over time.

Carcasses were treated in a post-chill decontamination tank with 50, 100, 250 or 500 ppm CSA. There were 20 carcasses per treatment with a total of 2 replications. Dwell time for the application was 23 seconds which is consistent with industry practices. Both positive (no treatment) and negative (no inoculation and no treatment) treatments were included. The 10^6 inoculum level is high, but is necessary to validate a 2 log reduction. *Salmonella* presence on processed broilers is low; however, *Campylobacter* can be as high as 1.8 logs. Therefore a 2 log reduction is targeted to eliminate naturally occurring levels of target pathogens on processed poultry. Rinse samples were direct plated at both 0 hr which represents immediately after the birds were treated and also at 24 hr to simulate USDA sampling procedures. USDA takes samples at the plant, places them on ice and ships them to the laboratories for plating the next day. The results are reported as CFU/sample.

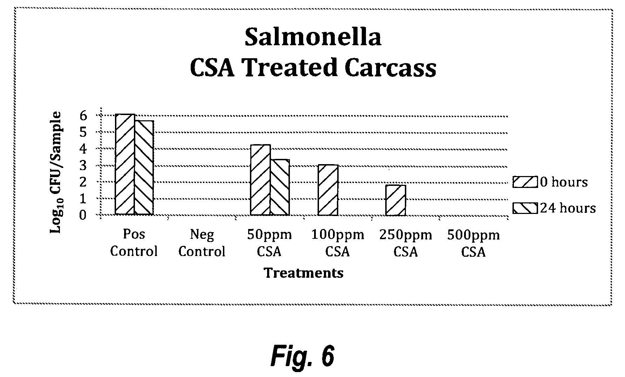

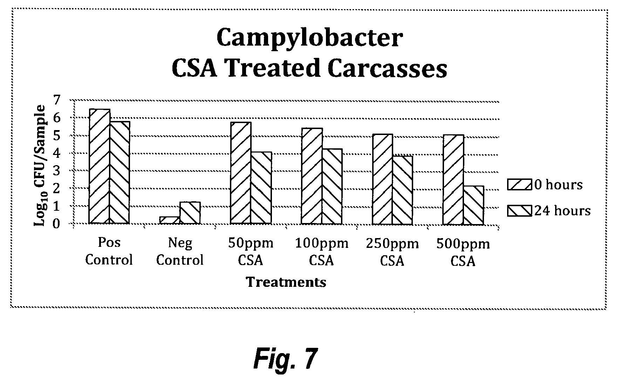

Figure 6 illustrates results for *Salmonella* and Figure 7 illustrates results for *Campylobacter*. *Salmonella* was completely eliminated at 100 ppm when samples were held 24 hr prior to plating. At 0 hr, 100, 250 and 500 ppm CSA resulted in a greater than 3 log reduction in *Salmonella* with 500 ppm completely eliminating *Salmonella.*

For *Campylobacter,* 250 and 500 ppm resulted in a 1-log reduction in *Campylobacter* at 0 hr. Greater reductions were observed when samples were held 24 hr with 50, 100 and 250 ppm CSA resulting in a 2 log reduction and 500 ppm resulting a 4 log reduction.

### Example 6

Example 6 illustrates microbial colonization in a boiler where chickens have been treated with ceragenin compounds at 7, 14, and 21 days. Birds were inoculated on day 1 with 10^6 *Salmonella* and *Campylobacter.* The ceragenin compound was applied at day 10. Therefore, day 7 data does not reflect any ceragenin treatment. The results (colony forming units/sample) are illustrated in Table 2 below.

**Table 2**

| | 7 days | 14 days | 21 days |
|---|---|---|---|
| Water (control) | 4.40654018 | 2.73239376 | 3.991742785 |
| 50 ppm CSA | 5.166125505 | 3.736905626 | 2.835966777 |
| 100 ppm CSA | 4.474701781 | 3.18610838 | 2.672097858 |

There is a natural tendency for colonization to initially decrease over time, which is observed in the data in Table 2. However, as expected, by day 21 microbial colonization rebounded and continued to grow. In contrast, samples treated with 50 ppm and 100 ppm CSA continued declining through day 21. These results illustrate the desired resistance to colonization over time of food products treated according to the methods described herein.

### V. Additional Details of Ceragenin Compounds

In some embodiments disclosed herein the CSA compound may have a formula as set for in Formula (V):

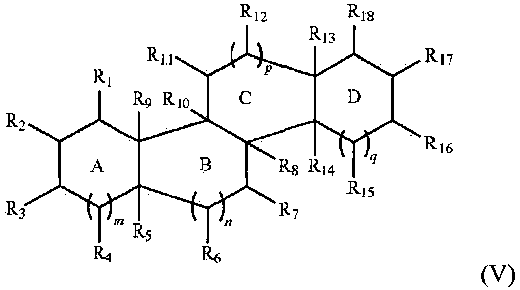

Where m, n, p, and q are independently 0 or 1; R¹-R¹⁸ represent substituents that are attached to the indicated atom on the steroid backbone (i.e., steroid group); and at least two, preferably at least three, of R¹-R¹⁸ each include a cationic group.

In one embodiment, rings A, B, C, and D are independently saturated, or are fully or partially unsaturated, provided that at least two of rings A, B, C, and D are saturated; m, n, p, and q are independently 0 or 1; R₁ through R₄, R₆ , R₇ , R₁₁ , T₁₂, R₁₅, R₁₆, and R₁₈ are independently selected from the group consisting of hydrogen, hydroxyl, a substituted or unsubstituted alkyl, substituted or unsubstituted hydroxyalkyl, substituted or unsubstituted alkyloxyalkyl, substituted or unsubstituted alkylcarboxyalkyl, substituted or unsubstituted alkylaminoalkyl, substituted or unsubstituted alkylaminoalkylamino, substituted or unsubstituted alkylaminoalkylaminoalkylamino, a substituted or unsubstituted aminoalkyl, a substituted or unsubstituted aryl, a substituted or unsubstituted arylaminoalkyl, substituted or unsubstituted haloalkyl, substituted or unsubstituted alkenyl, substituted or unsubstituted alkynyl, oxo, a linking group attached to a second steroid, a substituted or unsubstituted aminoalkyloxy, a substituted or unsubstituted aminoalkyloxyalkyl, a substituted or unsubstituted aminoalkylcarboxy, a substituted or unsubstituted aminoalkylaminocarbonyl, a substituted or unsubstituted aminoalkylcarboxamido, a substituted or unsubstituted di(alkyl)aminoalkyl, a substituted or unsubstituted C-carboxyalkyl, H₂N-HC(Q₅)-C(O)-O-, H₂N-HC(Q₅)-C(O)-N(H)-, substituted or unsubstituted azidoalkyloxy, substituted or unsubstituted cyanoalkyloxy, P.G.-HN-HC(Q₅)-C(O)-O-, substituted or unsubstituted guanidinoalkyloxy, substituted or unsubstituted quaternaryammoniumalkylcarboxy, and substituted or unsubstituted guanidinoalkyl carboxy, where Q₅ is a side chain of any amino acid (including a side chain of glycine, i.e., H), and P.G. is an amino protecting group; and R₅, R₈, R₉, R₁₀, R₁₃, R₁₄ and R₁₇ are independently deleted when one of rings A, B, C, or D is unsaturated so as to complete the valency of the carbon atom at that site, or R₅, R₈, R₉, R₁₀, R₁₃, and R₁₄ are independently selected from the group consisting of hydrogen, hydroxyl, a substituted or unsubstituted alkyl, substituted or unsubstituted hydroxyalkyl, substituted or unsubstituted alkyloxyalkyl, a substituted or unsubstituted aminoalkyl, a substituted or unsubstituted aryl, substituted or unsubstituted haloalkyl, substituted or unsubstituted alkenyl, substituted or unsubstituted alkynyl, oxo, a linking group attached to a second steroid, a substituted or unsubstituted aminoalkyloxy, a substituted or unsubstituted aminoalkylcarboxy, a substituted or unsubstituted aminoalkylaminocarbonyl, a substituted or unsubstituted di(alkyl)aminoalkyl, a substituted or unsubstituted C-carboxyalkyl, H₂N-HC(Q₅)-C(O)-O-, H₂N-HC(Q₅)-C(O)-N(H)-, substituted or unsubstituted azidoalkyloxy, substituted or unsubstituted cyanoalkyloxy, P.G.-HN-HC(Q₅)-C(O)-O-, substituted or unsubstituted guanidinoalkyloxy, and substituted or unsubstituted guanidinoalkylcarboxy, where Q5 is a side chain of any amino acid, P.G. is an amino protecting group; provided that at least two or three of R₁₋₄, R₆ , R₇ , R₁₁, R₁₂, R₁₅, R₁₆, R₁₇, and R₁₈ are independently selected from the group consisting of a substituted or unsubstituted aminoalkyl, a substituted or unsubstituted aminoalkyloxy, substituted or unsubstituted alkylcarboxyalkyl, substituted or unsubstituted alkylaminoalkylamino, substituted or unsubstituted alkylaminoalkylaminoalkylamino, a substituted or unsubstituted aminoalkylcarboxy, a substituted or unsubstituted arylaminoalkyl, a substituted or unsubstituted aminoalkyloxyaminoalkylaminocarbonyl, a substituted or unsubstituted aminoalkylaminocarbonyl, a substituted or unsubstituted aminoalkylcarboxyamido, a substituted or unsubstituted quaternaryammoniumalkylcarboxy, a substituted or unsubstituted di(alkyl)aminoalkyl, a substituted or unsubstituted C-carboxyalkyl, H₂N-HC(Q₅)-C(O)-O-, H₂N-HC(Q₅)-C(O)-N(H)-, substituted or unsubstituted azidoalkyloxy, substituted or unsubstituted cyanoalkyloxy, P.G.-HN-HC(Q5)-C(O)-O-, substituted or unsubstituted guanidinoalkyloxy, and a substituted or unsubstituted guanidinoalkylcarboxy.

In some embodiments, R₁ through R₄, R₆ , R₇ , R₁₁ , R₁₂, R₁₅, R₁₆, and R₁₈ are independently selected from the group consisting of hydrogen, hydroxyl, a substituted or unsubstituted (C₁-C₁₈) alkyl, substituted or unsubstituted (C₁-C₁₈) hydroxyalkyl, substituted or unsubstituted (C₁-C₁₈) alkyloxy-(C₁-C₁₈) alkyl, substituted or unsubstituted (C₁-C₁₈) alkylcarboxy-(C₁-C₁₈) alkyl, substituted or unsubstituted (C₁-C₁₈) alkylamino-(C₁-C₁₈)alkyl, substituted or unsubstituted (C₁-C₁₈) alkylamino-(C₁-C₁₈) alkylamino, substituted or unsubstituted (C₁-C₁₈) alkylamino-(C₁-C₁₈) alkylamino- (C₁-C₁₈) alkylamino, a substituted or unsubstituted (C₁-C₁₈) aminoalkyl, a substituted or unsubstituted aryl, a substituted or unsubstituted arylamino-(C₁-C₁₈) alkyl, substituted or unsubstituted (C₁-C₁₈) haloalkyl, substituted or unsubstituted (C₂-C₆) alkenyl, substituted or unsubstituted (C₂-C₆) alkynyl, oxo, a linking group attached to a second steroid, a substituted or unsubstituted (C₁-C₁₈) aminoalkyloxy, a substituted or unsubstituted (C₁-C₁₈) aminoalkyloxy-(C₁-C₁₈) alkyl, a substituted or unsubstituted (C₁-C₁₈) aminoalkylcarboxy, a substituted or unsubstituted (C₁-C₁₈) aminoalkylaminocarbonyl, a substituted or unsubstituted (C₁-C₁₈) aminoalkylcarboxamido, a substituted or unsubstituted di(C₁-C₁₈ alkyl)aminoalkyl, a substituted or unsubstituted C-carboxy(C₁-C₁₈)alkyl, H₂N-HC(Q₅)-C(O)-O-, H₂N-HC(Q₅)-C(O)-N(H)-, substituted or unsubstituted (C₁-C₁₈) azidoalkyloxy, substituted or unsubstituted (C₁-C₁₈) cyanoalkyloxy, P.G.-HN-HC(Q₅)-C(O)-O-, substituted or unsubstituted (C₁-C₁₈) guanidinoalkyloxy, substituted or unsubstituted (C₁-C₁₈) quaternaryammoniumalkylcarboxy, and substituted or unsubstituted (C₁-C₁₈) guanidinoalkyl carboxy, where Q₅ is a side chain of any amino acid (including a side chain of glycine, i.e., H), and P.G. is an amino protecting group; and R₅, R₈, R₉, R₁₀, R₁₃, R₁₄ and R₁₇ are independently deleted when one of rings A, B, C, or D is unsaturated so as to complete the valency of the carbon atom at that site, or R₅, R₈, R₉, R₁₀, R₁₃, and R₁₄ are independently selected from the group consisting of hydrogen, hydroxyl, a substituted or unsubstituted (C₁-C₁₈) alkyl, substituted or unsubstituted (C₁-C₁₈) hydroxyalkyl, substituted or unsubstituted (C₁-C₁₈) alkyloxy-(C₁-C₁₈) alkyl, a substituted or unsubstituted (C₁-C₁₈) aminoalkyl, a substituted or unsubstituted aryl, substituted or unsubstituted (C₁-C₁₈) haloalkyl, substituted or unsubstituted (C₂-C₆) alkenyl, substituted or unsubstituted (C₂-C₆) alkynyl, oxo, a linking group attached to a second steroid, a substituted or unsubstituted (C₁-C₁₈) aminoalkyloxy, a substituted or unsubstituted (C₁-C₁₈) aminoalkylcarboxy, a substituted or unsubstituted (C₁-C₁₈) aminoalkylaminocarbonyl, di(C₁-C₁₈ alkyl)aminoalkyl, a substituted or unsubstituted C-carboxy(C₁-C₁₈)alkyl, H₂N-HC(Q₅)-C(O)-O-, H₂N-HC(Q₅)-C(O)-N(H)-, substituted or unsubstituted (C₁-C₁₈) azidoalkyloxy, substituted or unsubstituted (C₁-C₁₈) cyanoalkyloxy, P.G.-HN-HC(Q₅)-C(O)-O-, substituted or unsubstituted (C₁-C₁₈) guanidinoalkyloxy, and substituted or unsubstituted (C₁-C₁₈) guanidinoalkylcarboxy, where Q5 is a side chain of any amino acid, and P.G. is an amino protecting group; provided that at least two or three of R₁₋₄, R₆ , R₇ , R₁₁, R₁₂, R₁₅, R₁₆, R₁₇, and R₁₈ are independently selected from the group consisting of a substituted or unsubstituted (C₁-C₁₈) aminoalkyl, a substituted or unsubstituted (C₁-C₁₈) aminoalkyloxy, substituted or unsubstituted (C₁-C₁₈) alkylcarboxy-(C₁-C₁₈) alkyl, substituted or unsubstituted (C₁-C₁₈) alkylamino-(C₁-C₁₈) alkylamino, substituted or unsubstituted (C₁-C₁₈) alkylamino-(C₁-C₁₈) alkylamino (C₁-C₁₈) alkylamino, a substituted or unsubstituted (C₁-C₁₈) aminoalkylcarboxy, a substituted or unsubstituted arylamino (C₁-C₁₈) alkyl, a substituted or unsubstituted (C₁-C₁₈) aminoalkyloxy (C₁-C₁₈) aminoalkylaminocarbonyl, a substituted or unsubstituted (C₁-C₁₈) aminoalkylaminocarbonyl, a substituted or unsubstituted (C₁-C₁₈) aminoalkylcarboxyamido, a substituted or unsubstituted (C₁-C₁₈) quaternaryammoniumalkylcarboxy, substituted or unsubstituted di(C₁-C₁₈ alkyl)aminoalkyl, a substituted or unsubstituted C-carboxy(C₁-C₁₈)alkyl, H₂N-HC(Q₅)-C(O)-O-, H₂N-HC(Q₅)-C(O)-N(H)-, substituted or unsubstituted (C₁-C₁₈) azidoalkyloxy, substituted or unsubstituted (C₁-C₁₈) cyanoalkyloxy, P.G.-HN-HC(Q5)-C(O)-O-, substituted or unsubstituted (C₁-C₁₈) guanidinoalkyloxy, and a substituted or unsubstituted (C₁-C₁₈) guanidinoalkylcarboxy.

In some embodiments, R₁ through R₄, R₆ , R₇ , R₁₁ , R₁₂, R₁₅, R₁₆, and R₁₈ are independently selected from the group consisting of hydrogen, hydroxyl, an unsubstituted (C₁-C₁₈) alkyl, unsubstituted (C₁-C₁₈) hydroxyalkyl, unsubstituted (C₁-C₁₈) alkyloxy-(C₁-C₁₈) alkyl, unsubstituted (C₁-C₁₈) alkylcarboxy-(C₁-C₁₈) alkyl, unsubstituted (C₁-C₁₈) alkylamino-(C₁-C₁₈)alkyl, unsubstituted (C₁-C₁₈) alkylamino-(C₁-C₁₈) alkylamino, unsubstituted (C₁-C₁₈) alkylamino-(C₁-C₁₈) alkylamino- (C₁-C₁₈) alkylamino, an unsubstituted (C₁-C₁₈) aminoalkyl, an unsubstituted aryl, an unsubstituted arylamino-(C₁-C₁₈) alkyl, oxo, an unsubstituted (C₁-C₁₈) aminoalkyloxy, an unsubstituted (C₁-C₁₈) aminoalkyloxy-(C₁-C₁₈) alkyl, an unsubstituted (C₁-C₁₈) aminoalkylcarboxy, an unsubstituted (C₁-C₁₈) aminoalkylaminocarbonyl, an unsubstituted (C₁-C₁₈) aminoalkylcarboxamido, an unsubstituted di(C₁-C₁₈ alkyl)aminoalkyl, an unsubstituted C-carboxy(C₁-C₁₈)alkyl, unsubstituted (C₁-C₁₈) guanidinoalkyloxy, unsubstituted (C₁-C₁₈) quaternaryammoniumalkylcarboxy, and unsubstituted (C₁-C₁₈) guanidinoalkyl carboxy; and R₅, R₈, R₉, R₁₀, R₁₃, R₁₄ and R₁₇ are independently deleted when one of rings A, B, C, or D is unsaturated so as to complete the valency of the carbon atom at that site, or R₅, R₈, R₉, R₁₀, R₁₃, and R₁₄ are independently selected from the group consisting of hydrogen, hydroxyl, an unsubstituted (C₁-C₁₈) alkyl, unsubstituted (C₁-C₁₈) hydroxyalkyl, unsubstituted (C₁-C₁₈) alkyloxy-(C₁-C₁₈) alkyl, unsubstituted (C₁-C₁₈) alkylcarboxy-(C₁-C₁₈) alkyl, unsubstituted (C₁-C₁₈) alkylamino-(C₁-C₁₈)alkyl, unsubstituted (C₁-C₁₈) alkylamino-(C₁-C₁₈) alkylamino, unsubstituted (C₁-C₁₈) alkylamino-(C₁-C₁₈) alkylamino- (C₁-C₁₈) alkylamino, an unsubstituted (C₁-C₁₈) aminoalkyl, an unsubstituted aryl, an unsubstituted arylamino-(C₁-C₁₈) alkyl, oxo, an unsubstituted (C₁-C₁₈) aminoalkyloxy, an unsubstituted (C₁-C₁₈) aminoalkyloxy-(C₁-C₁₈) alkyl, an unsubstituted (C₁-C₁₈) aminoalkylcarboxy, an unsubstituted (C₁-C₁₈) aminoalkylaminocarbonyl, an unsubstituted (C₁-C₁₈) aminoalkylcarboxamido, an unsubstituted di(C₁-C₁₈ alkyl)aminoalkyl, an unsubstituted C-carboxy(C₁-C₁₈)alkyl, unsubstituted (C₁-C₁₈) guanidinoalkyloxy, unsubstituted (C₁-C₁₈) quaternaryammoniumalkylcarboxy, and unsubstituted (C₁-C₁₈) guanidinoalkyl carboxy; provided that at least two or three of R₁₋₄, R₆ , R₇ , R₁₁, R₁₂, R₁₅, R₁₆, R₁₇, and R₁₈ are independently selected from the group consisting of hydrogen, hydroxyl, an unsubstituted (C₁-C₁₈) alkyl, unsubstituted (C₂-C₁₈) hydroxyalkyl, unsubstituted (C₁-C₁₈) alkyloxy-(C₁-C₁₈) alkyl, unsubstituted (C₁-C₁₈) alkylcarboxy-(C₁-C₁₈) alkyl, unsubstituted (C₁-C₁₈) alkylamino-(C₁-C₁₈)alkyl, unsubstituted (C₁-C₁₈) alkylamino-(C₁-C₁₈) alkylamino, unsubstituted (C₁-C₁₈) alkylamino-(C₁-C₁₈) alkylamino- (C₁-C₁₈) alkylamino, an unsubstituted (C₁-C₁₈) aminoalkyl, an unsubstituted aryl, an unsubstituted arylamino-(C₁-C₁₈) alkyl, oxo, an unsubstituted (C₁-C₁₈) aminoalkyloxy, an unsubstituted (C₁-C₁₈) aminoalkyloxy-(C₁-C₁₈) alkyl, an unsubstituted (C₁-C₁₈) aminoalkylcarboxy, an unsubstituted (C₁-C₁₈) aminoalkylaminocarbonyl, an unsubstituted (C₁-C₁₈) aminoalkylcarboxamido, an unsubstituted di(C₁-C₁₈ alkyl)aminoalkyl, an unsubstituted C-carboxy(C₁-C₁₈)alkyl, unsubstituted (C₁-C₁₈) guanidinoalkyloxy, unsubstituted (C₁-C₁₈) quaternaryammoniumalkylcarboxy, and unsubstituted (C₁-C₁₈) guanidinoalkyl carboxy.

The ceragenin compounds used in the anti-microbial wash compositions described herein may also have a structure as shown in Formula I: 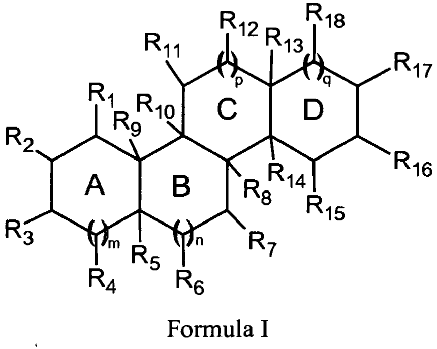 where each of fused rings A, B, C, and D is independently saturated, or is fully or partially unsaturated, provided that at least two of A, B, C, and D are saturated, wherein rings A, B, C, and D form a ring system; each of m, n, p, and q is independently 0 or 1 (i.e., each ring may independently be 5-membered or 6-membered); each of R₁ through R₄, R₆ , R₇ , R₁₁ , R₁₂, R₁₅, R₁₆, R₁₇, and R₁₈ is independently selected from the group consisting of hydrogen, hydroxyl, a substituted or unsubstituted (C₁-C₁₀) alkyl, (C₁-C₁₀) hydroxyalkyl, (C₁-C₁₀) alkyloxy-(C₁-C₁₀) alkyl, (C₁-C₁₀) alkylcarboxy-(C₁-C₁₀) alkyl, (C₁-C₁₀) alkylamino-(C₁-C₁₀) alkyl, (C₁-C₁₀) alkylamino-(C₁-C₁₀) alkylamino, (C₁-C₁₀) alkylamino-(C₁-C₁₀) alkylamino-(C₁-C₁₀) alkylamino, a substituted or unsubstituted (C₁-C₁₀) aminoalkyl, a substituted or unsubstituted aryl, a substituted or unsubstituted arylamino-(C₁-C₁₀) alkyl, (C₁-C₁₀) haloalkyl, C₂-C₆ alkenyl, C₂-C₆ alkynyl, oxo, a linking group attached to a second steroid, a substituted or unsubstituted (C₁-C₁₀) aminoalkyloxy, a substituted or unsubstituted (C₁-C₁₀) aminoalkyloxy-(C₁-C₁₀) alkyl, a substituted or unsubstituted (C₁-C₁₀) aminoalkylcarboxy, a substituted or unsubstituted (C₁-C₁₀) aminoalkylaminocarbonyl, a substituted or unsubstituted (C₁-C₁₀) aminoalkylcarboxamido, H₂N-HC(Q₅)-C(O)-O-, H₂N-HC(Q₅)-C(O)-N(H)-, (C₁-C₁₀) azidoalkyloxy, (C₁-C₁₀) cyanoalkyloxy, P.G.-HN-HC(Q₅)-C(O)-O-, (C₁-C₁₀) guanidinoalkyloxy, (C₁-C₁₀) quaternaryammoniumalkylcarboxy, and (C₁-C₁₀) guanidinoalkyl carboxy, where Q₅ is a side chain of any amino acid (including a side chain of glycine, i.e., H), P.G. is an amino protecting group, and each of R₅, R₈, R₉, R₁₀, R₁₃, and R₁₄ may be independently deleted when one of fused rings A, B, C, or D is unsaturated so as to complete the valency of the carbon atom at that site, or selected from the group consisting of hydrogen, hydroxyl, a substituted or unsubstituted (C₁-C₁₀) alkyl, (C₁-C₁₀) hydroxyalkyl, (C₁-C₁₀) alkyloxy-(C₁-C₁₀) alkyl, a substituted or unsubstituted (C₁-C₁₀) aminoalkyl, a substituted or unsubstituted aryl, (C₁-C₁₀) haloalkyl, C₂-C₆ alkenyl, C₂-C₆ alkynyl, oxo, a linking group attached to a second steroid, a substituted or unsubstituted (C₂-C₁₀) aminoalkyloxy, a substituted or unsubstituted (C₁-C₁₀) aminoalkylcarboxy, a substituted or unsubstituted (C₁-C₁₀) aminoalkylaminocarbonyl, H₂N-HC(Q₅)-C(O)-O-, H₂N-HC(Q₅)-C(O)-N(H)-, (C₁-C₁₀) azidoalkyloxy, (C₁-C₁₀) cyanoalkyloxy, P.G.-HN-HC(Q₅)-C(O)-O-, (C₁-C₁₀) guanidinoalkyloxy, and (C₁-C₁₀) guanidinoalkylcarboxy, where Q₅ is a side chain of any amino acid, P.G. is an amino protecting group, provided that at least two or three of R₁₋₄, R₆ , R₇ , R₁₁, R₁₂, R₁₅, R₁₆, R₁₇, and R₁₈ are independently selected from the group consisting of a substituted or unsubstituted (C₁-C₁₀) aminoalkyl, a substituted or unsubstituted (C₁-C₁₀) aminoalkyloxy, (C₁-C₁₀) alkylcarboxy-(C₁-C₁₀) alkyl, (C₁-C₁₀) alkylamino-(C₁-C₁₀) alkylamino, (C₁-C₁₀) alkylamino-(C₁-C₁₀) alkylamino-(C₁-C₁₀) alkylamino, a substituted or unsubstituted (C₁-C₁₀) aminoalkylcarboxy, a substituted or unsubstituted arylamino(C₁-C₁₀) alkyl, a substituted or unsubstituted (C₁-C₁₀) aminoalkyloxy-(C₁-C₁₀) aminoalkylaminocarbonyl, a substituted or unsubstituted (C₁-C₁₀) aminoalkylaminocarbonyl, a substituted or unsubstituted (C₁-C₅) aminoalkylcarboxyamido, a (C₁-C₁₀) quaternaryammonium alkylcarboxy, H₂N-HC(Q₅)-C(O)-O-, H₂N-HC(Q₅)-C(O)-N(H)-, (C₁-C₁₀) azidoalkyloxy, (C₁-C₁₀) cyanoalkyloxy, P.G.-HN-HC(Q₅)-C(O)-O-, (C₁-C₁₀) guanidinoalkyloxy, and a (C₁-C₁₀) guanidinoalkylcarboxy.

In Formula I, at least two or at least three of R₃, R₇, or R₁₂ may independently include a cationic moiety attached to the Formula I structure via a non-hydrolysable or hydrolysable linkage. Optionally, a tail moiety may be attached to Formula I at R₁₇. The tail moiety may be charged, uncharged, polar, non-polar, hydrophobic, amphipathic, and the like. Although not required, at least two or three of m, n, p. and q may be 1. In a preferred embodiment, m, n, and p = 1 and q = 0. Examples of such structures are shown in Figures 1A-1B.

In some embodiments, the ceragenin compounds of Formula (I), can be also represented by Formula (II):

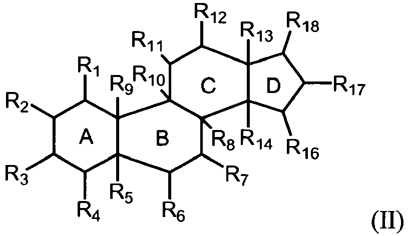

In some embodiments, rings A, B, C, and D are independently saturated.

In some embodiments, one or more of rings A, B, C, and D are heterocyclic.

In some embodiments, rings A, B, C, and D are non-heterocyclic.

In some embodiments, R₃, R₇, R₁₂, and R₁₈ are independently selected from the group consisting of hydrogen, an unsubstituted (C₁-C₁₈) alkyl, unsubstituted (C₁-C₁₈) hydroxyalkyl, unsubstituted (C₁-C₁₈) alkyloxy-(C₁-C₁₈) alkyl, unsubstituted (C₁-C₁₈) alkylcarboxy-(C₁-C₁₈) alkyl, unsubstituted (C₁-C₁₈) alkylamino-(C₁-C₁₈)alkyl, unsubstituted (C₁-C₁₈) alkylamino-(C₁-C₁₈) alkylamino, unsubstituted (C₁-C₁₈) alkylamino-(C₁-C₁₈) alkylamino- (C₁-C₁₈) alkylamino, an unsubstituted (C₁-C₁₈) aminoalkyl, an unsubstituted arylamino-(C₁-C₁₈) alkyl, an unsubstituted (C₁-C₁₈) aminoalkyloxy, an unsubstituted (C₁-C₁₈) aminoalkyloxy-(C₁-C₁₈) alkyl, an unsubstituted (C₁-C₁₈) aminoalkylcarboxy, an unsubstituted (C₁-C₁₈) aminoalkylaminocarbonyl, an unsubstituted (C₁-C₁₈) aminoalkylcarboxamido, an unsubstituted di(C₁-C₁₈ alkyl)aminoalkyl, unsubstituted (C₁-C₁₈) guanidinoalkyloxy, unsubstituted (C₁-C₁₈) quaternaryammoniumalkylcarboxy, and unsubstituted (C₁-C₁₈) guanidinoalkyl carboxy; and R₁, R₂, R₄, R₅, R₆, R₈, R₉, R₁₀, R₁₁, R₁₃, R₁₄, R₁₅, R₁₆, and R₁₇ are independently selected from the group consisting of hydrogen and unsubstituted (C₁-C₆) alkyl.

In some embodiments, R₃, R₇, R₁₂, and R₁₈ are independently selected from the group consisting of hydrogen, an unsubstituted (C₁-C₆) alkyl, unsubstituted (C₁-C₆) hydroxyalkyl, unsubstituted (C₁-C₁₆) alkyloxy-(C₁-C₅) alkyl, unsubstituted (C₁-C₁₆) alkylcarboxy-(C₁-C₅) alkyl, unsubstituted (C₁-C₁₆) alkylamino-(C₁-C₅)alkyl, unsubstituted (C₁-C₁₆) alkylamino-(C₁-C₅) alkylamino, unsubstituted (C₁-C₁₆) alkylamino-(C₁-C₁₆) alkylamino-(C₁-C₅) alkylamino, an unsubstituted (C₁-C₁₆) aminoalkyl, an unsubstituted arylamino-(C₁-C₅) alkyl, an unsubstituted (C₁-C₅) aminoalkyloxy, an unsubstituted (C₁-C₁₆) aminoalkyloxy-(C₁-C₅) alkyl, an unsubstituted (C₁-C₅) aminoalkylcarboxy, an unsubstituted (C₁-C₅) aminoalkylaminocarbonyl, an unsubstituted (C₁-C₅) aminoalkylcarboxamido, an unsubstituted di(C₁-C₅ alkyl)amino-(C₁-C₅) alkyl, unsubstituted (C₁-C₅) guanidinoalkyloxy, unsubstituted (C₁-C₁₆) quaternaryammoniumalkylcarboxy, and unsubstituted (C₁-C₁₆) guanidinoalkylcarboxy;

In some embodiments, R₁, R₂, R₄, R₅, F₆, R₈, R₁₀, R₁₁, R₁₄, R₁₆, and R₁₇ are each hydrogen; and R₉ and R₁₃ are each methyl.

In some embodiments, R₃, R₇, R₁₂, and R₁₈ are independently selected from the group consisting of aminoalkyloxy; aminoalkylcarboxy; alkylaminoalkyl; alkoxycarbonylalkyl; alkylcarbonylalkyl; di(alkyl)aminoalkyl; alkoxycarbonylalkyl; and alkylcarboxyalkyl.

In some embodiments, R₃, R₇, and R₁₂ are independently selected from the group consisting of aminoalkyloxy and aminoalkylcarboxy; and R₁₈ is selected from the group consisting of alkylaminoalkyl; alkoxycarbonylalkyl; alkylcarbonyloxyalkyl; di(alkyl)aminoalkyl; alkylaminoalkyl; alkyoxycarbonylalkyl; and alkylcarboxyalkyl.

In some embodiments, R₃, R₇, and R₁₂ are the same.

In some embodiments, R₃, R₇, and R₁₂ are aminoalkyloxy.

In some embodiments, R₃, R₇, and R₁₂ are aminoalkylcarboxy.

In some embodiments, R₁₈ is alkylaminoalkyl.

In some embodiments, R₁₈ is alkoxycarbonylalkyl.

In some embodiments, R₁₈ is di(alkyl)aminoalkyl.

In some embodiments, R₁₈ is alkylcarboxyalkyl.

In some embodiments, R₃, R₇, R₁₂, and R₁₈ are independently selected from the group consisting of amino-C₃-alkyloxy; amino-C₃-alkyl-carboxy; C₈-alkylamino-C₅-alkyl; C₈-alkoxy-carbonyl-C₄-alkyl; C₈-alkyl-carbonyl-C₄-alkyl; di-(C₅-alkyl)amino-C₅-alkyl; C₁₃-alkylamino-C₅-alkyl; C₆-alkoxy-carbonyl-C₄-alkyl; C₆-alkyl-carboxy-C₄-alkyl; and C₁₆-alkylamino-C₅-alkyl.

In some embodiments, m, n, and p are each 1 and q is 0.

In some embodiments, the ceragenin compounds of Formula (I) can be also represented by Formula (III):

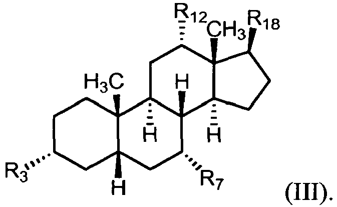

In some embodiments, the CSA, or a pharmaceutically acceptable salt thereof, is: 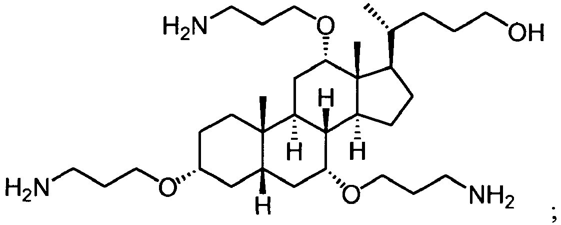 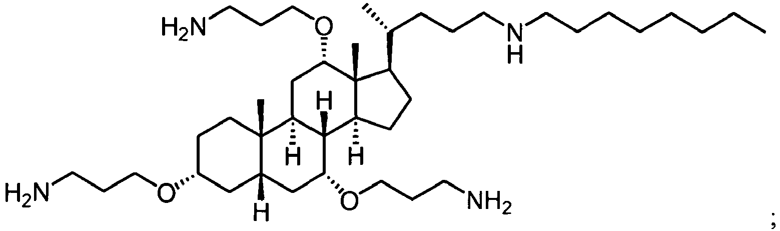 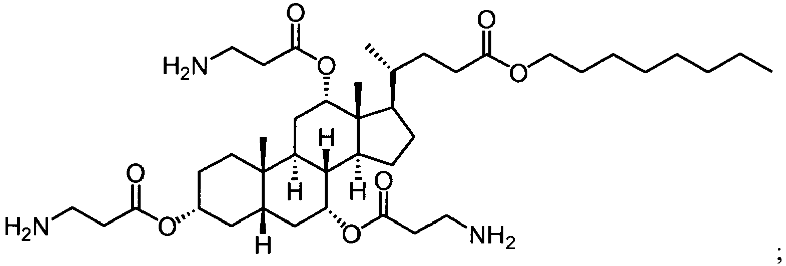 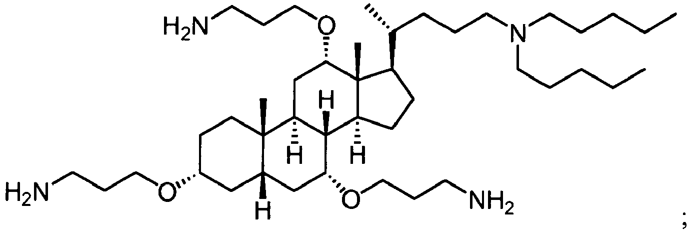 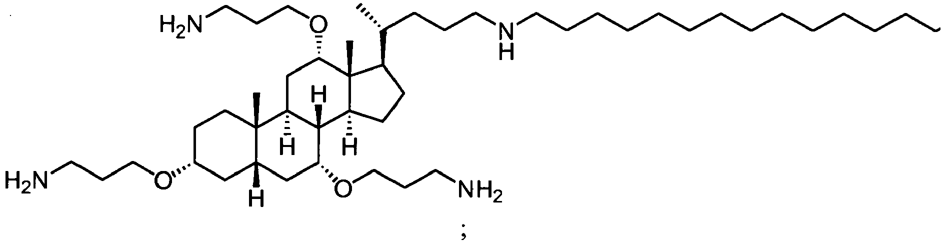 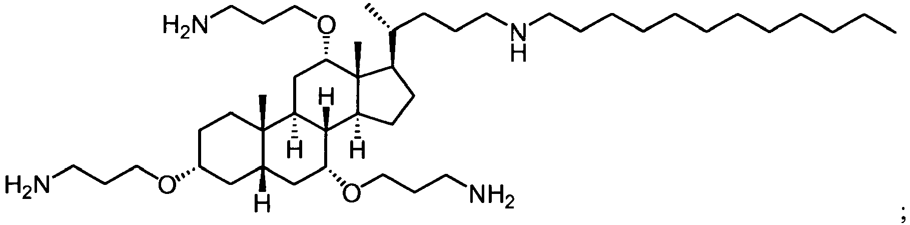 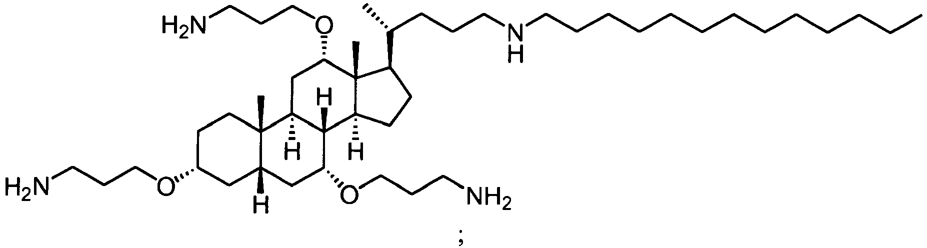 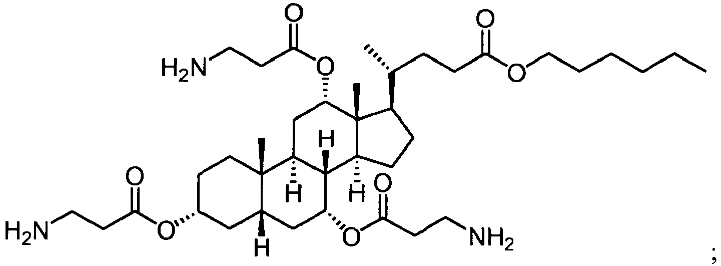 and

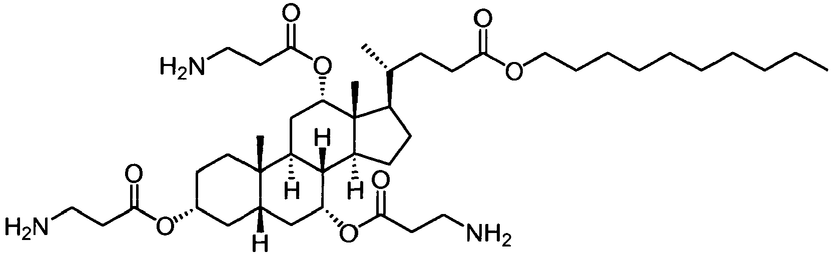

In some embodiments, the ceragenin compound is

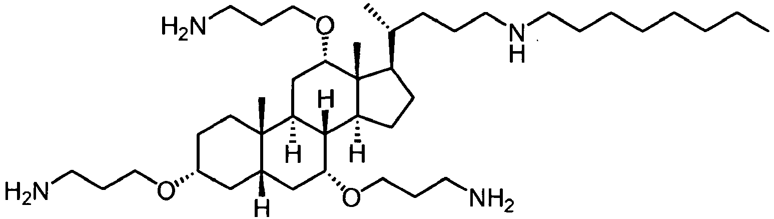

In other embodiments, the ceragenin compound is

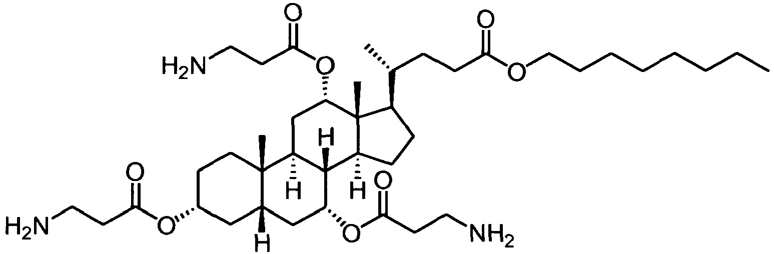

In other embodiments, the ceragenin compound is

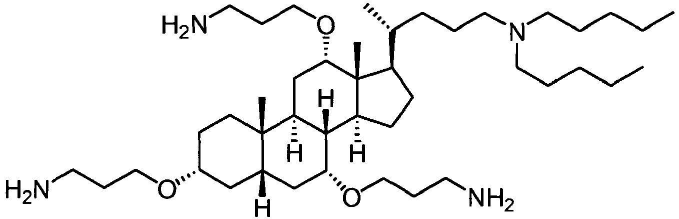

In other embodiments, the ceragenin compound is

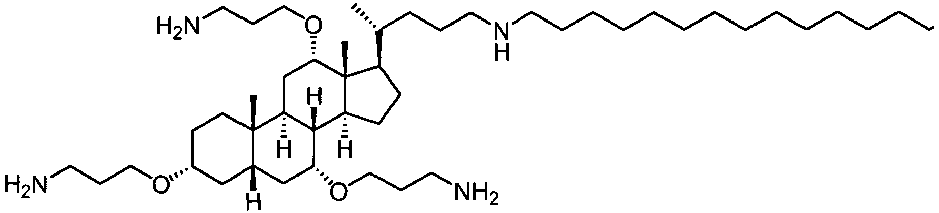

Terms and phrases used in this application, and variations thereof, especially in the appended claims, unless otherwise expressly stated, should be construed as open ended as opposed to limiting. As examples of the foregoing, the term 'including' should be read to mean 'including, without limitation,' 'including but not limited to,' or the like; the term 'comprising' as used herein is synonymous with 'including,' 'containing,' or 'characterized by,' and is inclusive or open-ended and does not exclude additional, unrecited elements or method steps; the term 'having' should be interpreted as 'having at least;' the term 'includes' should be interpreted as 'includes but is not limited to;' the term 'example' is used to provide exemplary instances of the item in discussion, not an exhaustive or limiting list thereof; and use of terms like 'preferably,' 'preferred,' 'desired,' or 'desirable,' and words of similar meaning should not be understood as implying that certain features are critical, essential, or even important to the structure or function of the invention, but instead as merely intended to highlight alternative or additional features that may or may not be utilized in a particular embodiment. In addition, the term "comprising" is to be interpreted synonymously with the phrases "having at least" or "including at least". When used in the context of a process, the term "comprising" means that the process includes at least the recited steps, but may include additional steps. When used in the context of a compound, composition or device, the term "comprising" means that the compound, composition or device includes at least the recited features or components, but may also include additional features or components. Likewise, a group of items linked with the conjunction 'and' should not be read as requiring that each and every one of those items be present in the grouping, but rather should be read as 'and/or' unless expressly stated otherwise. Similarly, a group of items linked with the conjunction 'or' should not be read as requiring mutual exclusivity among that group, but rather should be read as 'and/or' unless expressly stated otherwise.

It is understood that, in any compound described herein having one or more chiral centers, if an absolute stereochemistry is not expressly indicated, then each center may independently be of R-configuration or S-configuration or a mixture thereof. Thus, the compounds provided herein may be enantiomerically pure, enantiomerically enriched, racemic mixture, diastereomerically pure, diastereomerically enriched, or a stereoisomeric mixture. In addition it is understood that, in any compound described herein having one or more double bond(s) generating geometrical isomers that can be defined as E or Z, each double bond may independently be E or Z a mixture thereof.

Likewise, it is understood that, in any compound described, all tautomeric forms are also intended to be included.

It is to be understood that where compounds disclosed herein have unfilled valencies, then the valencies are to be filled with hydrogens or isotopes thereof, e.g., hydrogen-1 (protium) and hydrogen-2 (deuterium).

It is understood that the compounds described herein can be labeled isotopically. Substitution with isotopes such as deuterium may afford certain therapeutic advantages resulting from greater metabolic stability, such as, for example, increased *in vivo* half-life or reduced dosage requirements. Each chemical element as represented in a compound structure may include any isotope of said element. For example, in a compound structure a hydrogen atom may be explicitly disclosed or understood to be present in the compound. At any position of the compound that a hydrogen atom may be present, the hydrogen atom can be any isotope of hydrogen, including but not limited to hydrogen-1 (protium) and hydrogen-2 (deuterium). Thus, reference herein to a compound encompasses all potential isotopic forms unless the context clearly dictates otherwise.

It is understood that the methods and combinations described herein include crystalline forms (also known as polymorphs, which include the different crystal packing arrangements of the same elemental composition of a compound), amorphous phases, salts, solvates, and hydrates. In some embodiments, the compounds described herein exist in solvated forms with pharmaceutically acceptable solvents such as water, ethanol, or the like. In other embodiments, the compounds described herein exist in unsolvated form. Solvates contain either stoichiometric or non-stoichiometric amounts of a solvent, and may be formed during the process of crystallization with pharmaceutically acceptable solvents such as water, ethanol, or the like. Hydrates are formed when the solvent is water, or alcoholates are formed when the solvent is alcohol. In addition, the compounds provided herein can exist in unsolvated as well as solvated forms. In general, the solvated forms are considered equivalent to the unsolvated forms for the purposes of the compounds and methods provided herein.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present embodiments. At the very least, and not as an attempt to limit the application of the doctrine of equivalents to the scope of the claims, each numerical parameter should be construed in light of the number of significant digits and ordinary rounding approaches.

Notwithstanding that the numerical ranges and parameters setting forth the broad scope of the embodiments are approximations, the numerical values set forth in the specific examples are reported as precisely as possible. Any numerical value, however, inherently contains certain errors necessarily resulting from the standard deviation found in their respective testing measurements. Every numerical range given throughout this specification and claims will include every narrower numerical range that falls within such broader numerical range, as if such narrower numerical ranges were all expressly written herein. Where a range of values is provided, it is understood that the upper and lower limit, and each intervening value between the upper and lower limit of the range is encompassed within the embodiments.

As used herein, any "R" group(s) such as, without limitation, R¹, R², R³, R⁴, R⁵, R⁶, R⁷, R⁸, R⁹, R¹⁰, R¹¹, R¹², R¹³, R¹⁴, R¹⁵, R¹⁶, R¹⁷, and R¹⁸ represent substituents that can be attached to the indicated atom. Unless otherwise specified, an R group may be substituted or unsubstituted.

The term "ring" as used herein can be heterocyclic or carbocyclic. The term "saturated" as used herein refers to the fused ring of Formula I having each atom in the fused ring either hydrogenated or substituted such that the valency of each atom is filled. The term "unsaturated" as used herein refers to the fused ring of Formula I where the valency of each atom of the fused ring may not be filled with hydrogen or other substituent groups. For example, adjacent carbon atoms in the fused ring can be doubly bound to each other. Unsaturation can also include deleting at least one of the following pairs and completing the valency of the ring carbon atoms at these deleted positions with a double bond; such as R₅ and R₉; R₈ and R₁₀; and R₁₃ and R₁₄.

Whenever a group is described as being "substituted" that group may be substituted with one, two, three or more of the indicated substituents, which may be the same or different, each replacing a hydrogen atom. If no substituents are indicated, it is meant that the indicated "substituted" group may be substituted with one or more group(s) individually and independently selected from alkyl, alkenyl, alkynyl, cycloalkyl, cycloalkenyl, cycloalkynyl, acylalkyl, alkoxyalkyl, aminoalkyl, amino acid, aryl, heteroaryl, heteroalicyclyl, aralkyl, heteroaralkyl, (heteroalicyclyl)alkyl, hydroxy, protected hydroxyl, alkoxy, aryloxy, acyl, mercapto, alkylthio, arylthio, cyano, halogen (e.g., F, Cl, Br, and I), thiocarbonyl, O-carbamyl, N-carbamyl, O-thiocarbamyl, N-thiocarbamyl, C-amido, N-amido, S-sulfonamido, N-sulfonamido, C-carboxy, protected C-carboxy, O-carboxy, isocyanato, thiocyanato, isothiocyanato, nitro, oxo, silyl, sulfenyl, sulfinyl, sulfonyl, haloalkyl, haloalkoxy, trihalomethanesulfonyl, trihalomethanesulfonamido, an amino, a mono-substituted amino group and a di-substituted amino group, R^{a}O(CH₂)ₘO-, R^{b}(CH₂)ₙO-, R^{c}C(O)O(CH₂)ₚO-, and protected derivatives thereof. The substituent may be attached to the group at more than one attachment point. For example, an aryl group may be substituted with a heteroaryl group at two attachment points to form a fused multicyclic aromatic ring system. Biphenyl and naphthalene are two examples of an aryl group that is substituted with a second aryl group.

As used herein, "Cₐ" or "Cₐ to C_{b}" in which "a" and "b" are integers refer to the number of carbon atoms in an alkyl, alkenyl or alkynyl group, or the number of carbon atoms in the ring of a cycloalkyl, cycloalkenyl, cycloalkynyl, aryl, heteroaryl or heteroalicyclyl group. That is, the alkyl, alkenyl, alkynyl, ring of the cycloalkyl, ring of the cycloalkenyl, ring of the cycloalkynyl, ring of the aryl, ring of the heteroaryl or ring of the heteroalicyclyl can contain from "a" to "b", inclusive, carbon atoms. Thus, for example, a "C₁ to C₄ alkyl" group refers to all alkyl groups having from 1 to 4 carbons, that is, CH₃-, CH₃CH₂-, CH₃CH₂CH₂-, (CH₃)₂CH-, CH₃CH₂CH₂CH₂-, CH₃CH₂CH(CH₃)-and (CH₃)₃C-. If no "a" and "b" are designated with regard to an alkyl, alkenyl, alkynyl, cycloalkyl cycloalkenyl, cycloalkynyl, aryl, heteroaryl or heteroalicyclyl group, the broadest range described in these definitions is to be assumed.

As used herein, "alkyl" refers to a straight or branched hydrocarbon chain that comprises a fully saturated (no double or triple bonds) hydrocarbon group. The alkyl group may have 1 to 25 carbon atoms (whenever it appears herein, a numerical range such as "1 to 25" refers to each integer in the given range; e.g., "1 to 25 carbon atoms" means that the alkyl group may consist of 1 carbon atom, 2 carbon atoms, 3 carbon atoms, *etc.,* up to and including 25 carbon atoms, although the present definition also covers the occurrence of the term "alkyl" where no numerical range is designated). The alkyl group may also be a medium size alkyl having 1 to 15 carbon atoms. The alkyl group could also be a lower alkyl having 1 to 6 carbon atoms. The alkyl group of the compounds may be designated as "C₄" or "C₁-C₄ alkyl" or similar designations. By way of example only, "C₁-C₄ alkyl" indicates that there are one to four carbon atoms in the alkyl chain, i.e., the alkyl chain is selected from methyl, ethyl, propyl, iso-propyl, n-butyl, iso-butyl, sec-butyl, and t-butyl. Typical alkyl groups include, but are in no way limited to, methyl, ethyl, propyl, isopropyl, butyl, isobutyl, tertiary butyl, pentyl and hexyl. The alkyl group may be substituted or unsubstituted.

As used herein, "alkenyl" refers to an alkyl group that contains in the straight or branched hydrocarbon chain one or more double bonds. The alkenyl group may have 2 to 25 carbon atoms (whenever it appears herein, a numerical range such as "2 to 25" refers to each integer in the given range; e.g., "2 to 25 carbon atoms" means that the alkenyl group may consist of 2 carbon atom, 3 carbon atoms, 4 carbon atoms, *etc.,* up to and including 25 carbon atoms, although the present definition also covers the occurrence of the term "alkenyl" where no numerical range is designated). The alkenyl group may also be a medium size alkenyl having 2 to 15 carbon atoms. The alkenyl group could also be a lower alkenyl having 1 to 6 carbon atoms. The alkenyl group of the compounds may be designated as "C₄" or "C₂-C₄ alkyl" or similar designations. An alkenyl group may be unsubstituted or substituted.

As used herein, "alkynyl" refers to an alkyl group that contains in the straight or branched hydrocarbon chain one or more triple bonds. The alkynyl group may have 2 to 25 carbon atoms (whenever it appears herein, a numerical range such as "2 to 25" refers to each integer in the given range; *e.g.,* "2 to 25 carbon atoms" means that the alkynyl group may consist of 2 carbon atom, 3 carbon atoms, 4 carbon atoms, *etc.,* up to and including 25 carbon atoms, although the present definition also covers the occurrence of the term "alkynyl" where no numerical range is designated). The alkynyl group may also be a medium size alkynyl having 2 to 15 carbon atoms. The alkynyl group could also be a lower alkynyl having 2 to 6 carbon atoms. The alkynyl group of the compounds may be designated as "C₄" or "C₂-C₄ alkyl" or similar designations. An alkynyl group may be unsubstituted or substituted.

As used herein, "aryl" refers to a carbocyclic (all carbon) monocyclic or multicyclic aromatic ring system (including fused ring systems where two carbocyclic rings share a chemical bond) that has a fully delocalized pi-electron system throughout all the rings. The number of carbon atoms in an aryl group can vary. For example, the aryl group can be a C₆-C₁₄ aryl group, a C₆-C₁₀ aryl group, or a C₆ aryl group (although the definition of C₆-C₁₀ aryl covers the occurrence of "aryl" when no numerical range is designated). Examples of aryl groups include, but are not limited to, benzene, naphthalene and azulene. An aryl group may be substituted or unsubstituted.

As used herein, "aralkyl" and "aryl(alkyl)" refer to an aryl group connected, as a substituent, via a lower alkylene group. The aralkyl group may have 6 to 20 carbon atoms (whenever it appears herein, a numerical range such as "6 to 20" refers to each integer in the given range; e.g., "6 to 20 carbon atoms" means that the aralkyl group may consist of 6 carbon atom, 7 carbon atoms, 8 carbon atoms, *etc.,* up to and including 20 carbon atoms, although the present definition also covers the occurrence of the term "aralkyl" where no numerical range is designated). The lower alkylene and aryl group of an aralkyl may be substituted or unsubstituted. Examples include but are not limited to benzyl, 2-phenylalkyl, 3-phenylalkyl, and naphthylalkyl.

"Lower alkylene groups" refer to a C₁-C₂₅ straight-chained alkyl tethering groups, such as -CH₂- tethering groups, forming bonds to connect molecular fragments via their terminal carbon atoms. Examples include but are not limited to methylene (-CH₂-), ethylene (-CH₂CH₂-), propylene (-CH₂CH₂CH₂-), and butylene (-CH₂CH₂CH₂CH₂-). A lower alkylene group can be substituted by replacing one or more hydrogen of the lower alkylene group with a substituent(s) listed under the definition of "substituted."

As used herein, "cycloalkyl" refers to a completely saturated (no double or triple bonds) mono- or multi- cyclic hydrocarbon ring system. When composed of two or more rings, the rings may be joined together in a fused fashion. Cycloalkyl groups can contain 3 to 10 atoms in the ring(s) or 3 to 8 atoms in the ring(s). A cycloalkyl group may be unsubstituted or substituted. Typical cycloalkyl groups include, but are in no way limited to, cyclopropyl, cyclobutyl, cyclopentyl, cyclohexyl, cycloheptyl and cyclooctyl.

As used herein, "cycloalkenyl" refers to a mono- or multi- cyclic hydrocarbon ring system that contains one or more double bonds in at least one ring; although, if there is more than one, the double bonds cannot form a fully delocalized pi-electron system throughout all the rings (otherwise the group would be "aryl," as defined herein). When composed of two or more rings, the rings may be connected together in a fused fashion. A cycloalkenyl group may be unsubstituted or substituted.

As used herein, "cycloalkynyl" refers to a mono- or multi- cyclic hydrocarbon ring system that contains one or more triple bonds in at least one ring. If there is more than one triple bond, the triple bonds cannot form a fully delocalized pi-electron system throughout all the rings. When composed of two or more rings, the rings may be joined together in a fused fashion. A cycloalkynyl group may be unsubstituted or substituted.

As used herein, "alkoxy" or "alkyloxy" refers to the formula -OR wherein R is an alkyl, an alkenyl, an alkynyl, a cycloalkyl, a cycloalkenyl or a cycloalkynyl as defined above. A non-limiting list of alkoxys are methoxy, ethoxy, n-propoxy, 1-methylethoxy (isopropoxy), n-butoxy, iso-butoxy, sec-butoxy and tert-butoxy. An alkoxy may be substituted or unsubstituted.

As used herein, "acyl" refers to a hydrogen, alkyl, alkenyl, alkynyl, aryl, or heteroaryl connected, as substituents, via a carbonyl group. Examples include formyl, acetyl, propanoyl, benzoyl, and acryl. An acyl may be substituted or unsubstituted.

As used herein, "alkoxyalkyl" or "alkyloxyalkyl" refers to an alkoxy group connected, as a substituent, via a lower alkylene group. Examples include alkyl-O-alkyl-and alkoxy-alkyl- with the terms alkyl and alkoxy defined herein.

As used herein, "hydroxyalkyl" refers to an alkyl group in which one or more of the hydrogen atoms are replaced by a hydroxy group. Exemplary hydroxyalkyl groups include but are not limited to, 2-hydroxyethyl, 3-hydroxypropyl, 2-hydroxypropyl, and 2,2-dihydroxyethyl. A hydroxyalkyl may be substituted or unsubstituted.

As used herein, "haloalkyl" refers to an alkyl group in which one or more of the hydrogen atoms are replaced by a halogen (e.g., mono-haloalkyl, di-haloalkyl and tri-haloalkyl). Such groups include but are not limited to, chloromethyl, fluoromethyl, difluoromethyl, trifluoromethyl and 1-chloro-2-fluoromethyl, 2-fluoroisobutyl. A haloalkyl may be substituted or unsubstituted.

The term "amino" as used herein refers to a -NH₂ group.

As used herein, the term "hydroxy" refers to a -OH group.

A "cyano" group refers to a "-CN" group.

A "carbonyl" or an "oxo" group refers to a C=O group.

The term "azido" as used herein refers to a -N₃ group.

As used herein, "aminoalkyl" refers to an amino group connected, as a substituent, via a lower alkylene group. Examples include H₂N-alkyl- with the term alkyl defined herein.

As used herein, "alkylcarboxyalkyl" refers to an alkyl group connected, as a substituent, to a carboxy group that is connected, as a substituent, to an alkyl group. Examples include alkyl-C(=O)O-alkyl- and alkyl-O-C(=O)-alkyl- with the term alkyl as defined herein.

As used herein, "alkylaminoalkyl" refers to an alkyl group connected, as a substituent, to an amino group that is connected, as a substituent, to an alkyl group. Examples include alkyl-NH-alkyl-, with the term alkyl as defined herein.

As used herein, "dialkylaminoalkyl" or "di(alkyl)aminoalkyl" refers to two alkyl groups connected, each as a substituent, to an amino group that is connected, as a substituent, to an alkyl group. Examples include 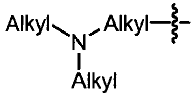 with the term alkyl as defined herein.

As used herein, "alkylaminoalkylamino" refers to an alkyl group connected, as a substituent, to an amino group that is connected, as a substituent, to an alkyl group that is connected, as a substituent, to an amino group. Examples include alkyl-NH-alkyl-NH-, with the term alkyl as defined herein.

As used herein, "alkylaminoalkylaminoalkylamino" refers to an alkyl group connected, as a substituent, to an amino group that is connected, as a substituent, to an alkyl group that is connected, as a substituent, to an amino group that is connected, as a substituent, to an alkyl group. Examples include alkyl-NH-alkyl-NH-alkyl-, with the term alkyl as defined herein.

As used herein, "arylaminoalkyl" refers to an aryl group connected, as a substituent, to an amino group that is connected, as a substituent, to an alkyl group. Examples include aryl-NH-alkyl-, with the terms aryl and alkyl as defined herein.

As used herein, "aminoalkyloxy" refers to an amino group connected, as a substituent, to an alkyloxy group. Examples include H₂N-alkyl-O- and H₂N-alkoxy- with the terms alkyl and alkoxy as defined herein.

As used herein, "aminoalkyloxyalkyl" refers to an amino group connected, as a substituent, to an alkyloxy group connected, as a substituent, to an alkyl group. Examples include H₂N-alkyl-O-alkyl- and H₂N-alkoxy-alkyl- with the terms alkyl and alkoxy as defined herein.

As used herein, "aminoalkylcarboxy" refers to an amino group connected, as a substituent, to an alkyl group connected, as a substituent, to a carboxy group. Examples include H₂N-alkyl-C(=O)O- and H₂N-alkyl-O-C(=O)- with the term alkyl as defined herein.

As used herein, "aminoalkylaminocarbonyl" refers to an amino group connected, as a substituent, to an alkyl group connected, as a substituent, to an amino group connected, as a substituent, to a carbonyl group. Examples include H₂N-alkyl-NH-C(=O)- with the term alkyl as defined herein.

As used herein, "aminoalkylcarboxamido" refers to an amino group connected, as a substituent, to an alkyl group connected, as a substituent, to a carbonyl group connected, as a substituent to an amino group. Examples include H₂N-alkyl-C(=O)-NH- with the term alkyl as defined herein.

As used herein, "azidoalkyloxy" refers to an azido group connected as a substituent, to an alkyloxy group. Examples include N₃-alkyl-O- and N₃-alkoxy- with the terms alkyl and alkoxy as defined herein.

As used herein, "cyanoalkyloxy" refers to a cyano group connected as a substituent, to an alkyloxy group. Examples include NC-alkyl-O- and NC-alkoxy- with the terms alkyl and alkoxy as defined herein.

As used herein, "guanidinoalkyloxy" refers to a guanidinyl group connected, as a substituent, to an alkyloxy group. Examples include 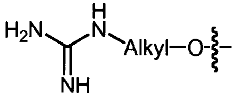 and 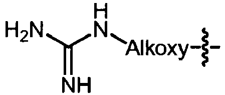 with the terms alkyl and alkoxy as defined herein.

As used herein, "guanidinoalkylcarboxy" refers to a guanidinyl group connected, as a substituent, to an alkyl group connected, as a substituent, to a carboxy group. Examples include 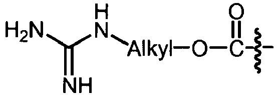 and 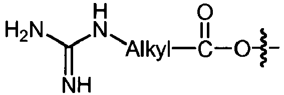 with the term alkyl as defined herein.

As used herein, "quaternaryammoniumalkylcarboxy" refers to a quaternized amino group connected, as a substituent, to an alkyl group connected, as a substituent, to a carboxy group. Examples include 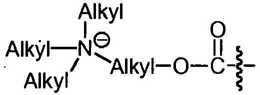 and 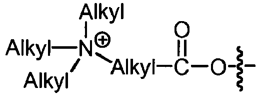 with the term alkyl as defined herein.

The term "halogen atom" or "halogen" as used herein, means any one of the radio-stable atoms of column 7 of the Periodic Table of the Elements, such as, fluorine, chlorine, bromine and iodine.

Where the numbers of substituents is not specified (e.g. haloalkyl), there may be one or more substituents present. For example "haloalkyl" may include one or more of the same or different halogens.

As used herein, the term "amino acid" refers to any amino acid (both standard and non-standard amino acids), including, but not limited to, α-amino acids, β-amino acids, γ-amino acids and δ-amino acids. Examples of suitable amino acids include, but are not limited to, alanine, asparagine, aspartate, cysteine, glutamate, glutamine, glycine, proline, serine, tyrosine, arginine, histidine, isoleucine, leucine, lysine, methionine, phenylalanine, threonine, tryptophan and valine. Additional examples of suitable amino acids include, but are not limited to, ornithine, hypusine, 2-aminoisobutyric acid, dehydroalanine, gamma-aminobutyric acid, citrulline, beta-alanine, alpha-ethyl-glycine, alpha-propyl-glycine and norleucine.

A linking group is a divalent moiety used to link one steroid to another steroid. In some embodiments, the linking group is used to link a first CSA with a second CSA (which may be the same or different). An example of a linking group is (C₁-C₁₀) alkyloxy-(C₁-C₁₀) alkyl.

The terms "P.G." or "protecting group" or "protecting groups" as used herein refer to any atom or group of atoms that is added to a molecule in order to prevent existing groups in the molecule from undergoing unwanted chemical reactions. Examples of protecting group moieties are described in T. W. Greene and P. G. M. Wuts, Protective Groups in Organic Synthesis, 3. Ed. John Wiley & Sons, 1999, and in J.F.W. McOmie, Protective Groups in Organic Chemistry Plenum Press, 1973, both of which are hereby incorporated by reference for the limited purpose of disclosing suitable protecting groups. The protecting group moiety may be chosen in such a way, that they are stable to certain reaction conditions and readily removed at a convenient stage using methodology known from the art. A non-limiting list of protecting groups include benzyl; substituted benzyl; alkylcarbonyls and alkoxycarbonyls (e.g., t-butoxycarbonyl (BOC), acetyl, or isobutyryl); arylalkylcarbonyls and arylalkoxycarbonyls (e.g., benzyloxycarbonyl); substituted methyl ether (e.g. methoxymethyl ether); substituted ethyl ether; a substituted benzyl ether; tetrahydropyranyl ether; silyls (e.g., trimethylsilyl, triethylsilyl, triisopropylsilyl, t-butyldimethylsilyl, tri-*iso*-propylsilyloxymethyl, [2-(trimethylsilyl)ethoxy]methyl or t-butyldiphenylsilyl); esters (e.g. benzoate ester); carbonates (e.g. methoxymethylcarbonate); sulfonates (e.g. tosylate or mesylate); acyclic ketal (e.g. dimethyl acetal); cyclic ketals (e.g., 1,3-dioxane, 1,3-dioxolanes, and those described herein); acyclic acetal; cyclic acetal (e.g., those described herein); acyclic hemiacetal; cyclic hemiacetal; cyclic dithioketals (e.g., 1,3-dithiane or 1,3-dithiolane); orthoesters (e.g., those described herein) and triarylmethyl groups (e.g., trityl; monomethoxytrityl (MMTr); 4,4'-dimethoxytrityl (DMTr); 4,4',4"-trimethoxytrityl (TMTr); and those described herein). Amino-protecting groups are known to those skilled in the art. In general, the species of protecting group is not critical, provided that it is stable to the conditions of any subsequent reaction(s) on other positions of the compound and can be removed at the appropriate point without adversely affecting the remainder of the molecule. In addition, a protecting group may be substituted for another after substantive synthetic transformations are complete. Clearly, where a compound differs from a compound disclosed herein only in that one or more protecting groups of the disclosed compound has been substituted with a different protecting group, that compound is within the disclosure.

Ceragenin compounds include but are not limited to compounds having cationic groups (e.g., amine or guanidine groups) covalently attached to a steroid backbone or scaffold at any carbon position, e.g., cholic acid. In various embodiments, a group is covalently attached at anyone, or more, of positions R₃, R₇, and R₁₂ of the sterol backbone. In additional embodiments, a group is absent from any one or more of positions R₃, R₇, and R₁₂ of the sterol backbone.

Anti-microbial CSA compounds described herein may also include a tether or "tail moiety" attached to the sterol backbone. The tail moiety may have variable chain length or size and may be one of charged, uncharged, polar, non-polar, hydrophobic, amphipathic, and the like. In various embodiments, a tail moiety may be attached at R₁₇ of Formula I. A tail moiety may include a heteroatom (O or N) covalently coupled to the sterol backbone.

Other ring systems can also be used, e.g., 5-member fused rings. Compounds with backbones having a combination of 5-membered and 6-membered rings are also contemplated. Cationic functional groups (e.g., amine or guanidine groups) can be separated from the backbone by at least one, two, three, four or more atoms.

As used in this specification and the appended claims, the singular forms "a", "an", and "the" include plural referents unless the context clearly dictates otherwise.

The described embodiments are to be considered in all respects only as illustrative and not restrictive. The scope of the invention is, therefore, indicated by the appended claims rather than by the foregoing description.

## Claims

1. A method for controlling growth of microbes on a slaughtered meat food product, the method comprising:
applying an anti-microbial wash composition to a surface of a slaughtered meat food product that may be exposed to one or more microbes, wherein the anti-microbial wash composition includes:
a fluid carrier; and
a ceragenin compound dispersed within the carrier, the ceragenin compound having a sterol backbone and a number of cationic groups attached thereto,
wherein the anti-microbial wash composition has a concentration of ceragenin compound in a range from 10 ppm to 5000 ppm; and
killing one or more types of microbes on the surface of the slaughtered meat food product.

2. The method of claim 1, wherein the anti-microbial wash composition has a concentration of ceragenin compound in a range from 10 ppm to 1000 ppm, preferably in a range from 25 ppm to 500 ppm.

3. The method of claim 1, wherein at least a portion of the cationic groups are attached to the sterol backbone through hydrolysable linkages.

4. The method of claim 1, further comprising applying a second anti-microbial wash composition onto the slaughtered meat food product, the second anti-microbial wash composition including a ceragenin compound at a second concentration that is different than a concentration of the ceragenin compound included within the first anti-microbial wash composition.

5. The method of claim 1, wherein the anti-microbial wash composition is sprayed onto the slaughtered meat food product or the slaughtered meat food product is dipped into the anti-microbial wash composition.

6. The method of claim 1, wherein the anti-microbial wash composition is applied to the carcass for a period of time in a range from 10 seconds to 60 seconds or at a concentration and for a period of time sufficient to provide at least a 0.8 log reduction in one or more types of microbes on the surface of the slaughtered meat food product.

7. The method of claim 1, wherein the slaughtered meat food product is a slaughtered animal carcass, such as poultry.

8. A slaughtered meat food product treated using the method of any of claims 1 to 7 so as to produce a slaughtered meat food product having an increased resistance to microbial colonization.

9. An anti-microbial wash composition for controlling growth of microbes on a slaughtered meat food product, the wash composition comprising:
a fluid carrier having a composition suitable for application to a slaughtered meat food product; and
a ceragenin compound dispersed within the carrier, the ceragenin compound having a sterol backbone and a number of cationic groups attached thereto, wherein the ceragenin compound is included in the fluid carrier at a concentration in a range from 10 ppm to 5000 ppm.

10. The anti-microbial wash composition of claim 9, wherein the concentration of ceragenin compound is included in the fluid carrier at a concentration in a range from 10 ppm to 1000 ppm, preferably in a range from 25 ppm to 500 ppm

11. The anti-microbial wash composition of claim 9, wherein the fluid carrier comprises water.

12. The anti-microbial wash composition of claim 9, wherein the cationic groups are attached to the sterol backbone via hydrolysable linkages.

13. The anti-microbial wash composition of claim 12, wherein the carrier comprises an acid so that the carrier has a pH of 6 or less, and wherein the ceragenin compound has a half-life of less than 40 days once applied to a surface that raises the pH of the ceragenin compound to a pH of 7 or greater.

14. The anti-microbial wash composition of claim 12, wherein the ceragenin compound is selected from the group consisting of CSA-32, CSA-33, CSA-34, CSA-35, CSA-41, CSA-42, CSA-43, CSA-45, CSA-47, CSA-49, CSA-50, CSA-51, CSA-52, CSA-56, CSA-61, CSA-141, CSA-142, and combinations thereof, preferably the ceragenin compound comprises CSA-44.

15. The anti-microbial wash composition of claim 9, wherein the ceragenin compound is adapted to and present in a concentration sufficient to kill both planktonic and biofilm forms of illness causing bacteria without causing harm to beneficial bacteria residing within a digestive tract of an end user.

## Patentansprüche

1. Verfahren zur Kontrolle des Wachstums von Mikroben auf einem Schlachtfleisch-Nahrungsmittelprodukt, wobei das Verfahren umfasst:
Aufbringen einer antimikrobiellen Waschzusammensetzung auf eine Oberfläche eines Schlachtfleisch-Nahrungsmittelprodukts, das einer oder mehreren Mikroben ausgesetzt sein kann, wobei die antimikrobielle Waschzusammensetzung umfasst:
einen Fluidträger; und
eine Ceragenin-Verbindung, die innerhalb des Trägers dispergiert ist, wobei die Ceragenin-Verbindung eine Sterol-Hauptkette und eine Anzahl von kationischen Gruppen, die daran befestigt sind, aufweist,
wobei die antimikrobielle Waschzusammensetzung eine Konzentration der Ceragenin-Verbindung in einem Bereich von 10 ppm bis 5.000 ppm aufweist; und
Abtöten eines oder mehrerer Typen von Mikroben auf der Oberfläche des Schlachtfleisch-Nahrungsmittelprodukts.

2. Verfahren nach Anspruch 1, wobei die antimikrobielle Waschzusammensetzung eine Konzentration der Ceragenin-Verbindung in einem Bereich von 10 ppm bis 1.000 ppm, vorzugsweise in einem Bereich von 25 ppm bis 500 ppm, aufweist.

3. Verfahren nach Anspruch 1, wobei zumindest ein Teil der kationischen Gruppen an der Sterol-Hauptkette durch hydrolysierbare Verbindungen befestigt ist.

4. Verfahren nach Anspruch 1, welches des Weiteren das Aufbringen einer zweiten antimikrobiellen Waschzusammensetzung auf das Schlachtfleisch-Nahrungsmittelprodukt umfasst, wobei die zweite antimikrobielle Waschzusammensetzung eine Ceragenin-Verbindung mit einer zweiten Konzentration umfasst, die sich von einer Konzentration der Ceragenin-Verbindung, die innerhalb der ersten antimikrobiellen Wachszusammensetzung umfasst ist, unterscheidet.

5. Verfahren nach Anspruch 1, wobei die antimikrobielle Waschzusammensetzung auf das Schlachtfleisch-Nahrungsmittelprodukt aufgesprüht wird oder wobei das Schlachtfleisch-Nahrungsmittelprodukt in die antimikrobielle Waschzusammensetzung eingetaucht wird.

6. Verfahren nach Anspruch 1, wobei die antimikrobielle Waschzusammensetzung auf den Tierkörper für eine Zeitspanne in einem Bereich von 10 Sekunden bis 60 Sekunden oder mit einer Konzentration und für eine Zeitspanne aufgebracht wird, die ausreichend ist, um eine Reduktion von 0,8 log bei einem oder mehreren Typen von Mikroben auf der Oberfläche des Schlachtfleisch-Nahrungsmittelprodukts bereitzustellen.

7. Verfahren nach Anspruch 1, wobei das Schlachtfleisch-Nahrungsmittelprodukt ein Tierkörper eines geschlachteten Tiers ist, so z.B. Geflügel.

8. Schlachtfleisch-Nahrungsmittelprodukt, das unter Verwendung des Verfahrens nach einem der Ansprüche 1 bis 7 behandelt wird, um ein Schlachtfleisch-Nahrungsmittelprodukt mit einer erhöhten Resistenz gegenüber Mikrobenkolonisierung bereitzustellen.

9. Antimikrobielle Waschzusammensetzung zur Kontrolle des Wachstums von Mikroben auf einem Schlachtfleisch-Nahrungsmittelprodukt, wobei die Waschzusammensetzung umfasst:
einen Fluidträger mit einer Zusammensetzung, die zum Aufbringen auf ein Schlachtfleisch-Nahrungsmittelprodukt geeignet ist; und
eine Ceragenin-Verbindung, die innerhalb des Trägers dispergiert ist, wobei die Ceragenin-Verbindung eine Sterol-Hauptkette und eine Anzahl von daran befestigten kationischen Gruppen aufweist, wobei die Ceragenin-Verbindung im Fluidträger mit einer Konzentration im Bereich von 10 ppm bis 5.000 ppm umfasst ist.

10. Antimikrobielle Waschzusammensetzung nach Anspruch 9, wobei die Konzentration der Ceragenin-Verbindung im Fluidträger mit einer Konzentration in einem Bereich von 10 ppm bis 1.000 ppm, vorzugsweise in einem Bereich von 25 ppm bis 500 ppm, umfasst ist.

11. Antimikrobielle Waschzusammensetzung nach Anspruch 9, wobei der Fluidträger Wasser umfasst.

12. Antimikrobielle Waschzusammensetzung nach Anspruch 9, wobei die kationischen Gruppen an der Sterol-Hauptkette über hydrolysierbare Verbindungen befestigt sind.

13. Antimikrobielle Waschzusammensetzung nach Anspruch 12, wobei der Träger eine Säure umfasst, so dass der Träger einen pH-Wert von 6 oder weniger aufweist, und wobei die Ceragenin-Verbindung eine Halbwertszeit von weniger als 40 Tagen aufweist, sobald sie auf eine Oberfläche aufgetragen wurde, was den pH-Wert der Ceragenin-Verbindung auf einen pH-Wert von 7 oder mehr anhebt.

14. Antimikrobielle Waschzusammensetzung nach Anspruch 12, wobei die Ceragenin-Verbindung aus der Gruppe bestehend aus CSA-32, CSA-33, CSA-34, CSA-35, CSA-41, CSA-42, CSA-43, CSA-45, CSA-47, CSA-49, CSA-50, CSA-51, CSA-52, CSA-56, CSA-61, CSA-141, CSA-142 und Kombinationen daraus ausgewählt wird, wobei die Ceragenin-Verbindung vorzugsweise CSA-44 umfasst.

15. Antimikrobielle Waschzusammensetzung nach Anspruch 9, wobei die Ceragenin-Verbindung ausgelegt ist und in einer Konzentration gegeben ist, die ausreichend ist, um sowohl planktonische als auch Biofilm-Formen von Krankheiten abzutöten, die Bakterien hervorrufen, ohne an günstigen Bakterien Schäden zu bewirken, die innerhalb eines Verdauungstraktes eines Nutzers gegeben sind.

## Revendications

1. Procédé pour lutter contre la prolifération de microbes sur un produit alimentaire à base de viande de bêtes abattues, le procédé comprenant :
l'application d'une composition de lavage antimicrobienne à la surface d'un produit alimentaire à base de viande de bêtes abattues qui peut être exposé à un ou plusieurs microbes, dans laquelle la composition de lavage antimicrobienne comprend :
un support fluide ; et
un composé céragénine dispersé dans le support, le composé céragénine ayant un squelette stérol et un certain nombre de groupes cationiques qui y sont attachés,
dans lequel la composition de lavage antimicrobienne a une concentration en composé céragénine dans une plage de 10 ppm à 5 000 ppm ; et
tuant un ou plusieurs types de microbes sur la surface du produit alimentaire à base de viande de bêtes abattues.

2. Procédé selon la revendication 1, dans lequel la composition de lavage antimicrobienne a une concentration en composé céragénine dans une plage de 10 ppm à 1 000 ppm, de préférence dans une plage de 25 ppm à 500 ppm.

3. Procédé selon la revendication 1, dans lequel au moins une partie des groupes cationiques sont attachés au squelette stérol par des liaisons hydrolysables.

4. Procédé selon la revendication 1, comprenant en outre l'application d'une deuxième composition de lavage antimicrobienne sur le produit alimentaire à base de viande de bêtes abattues, la deuxième composition de lavage antimicrobienne comprenant un composé céragénine à une deuxième concentration qui est différente d'une concentration du composé céragénine inclus dans la première composition de lavage antimicrobienne.

5. Procédé selon la revendication 1, dans lequel la composition de lavage antimicrobienne est pulvérisée sur le produit alimentaire à base de viande de bêtes abattues ou le produit alimentaire à base de viande de bêtes abattues est immergé dans la composition de lavage antimicrobienne.

6. Procédé selon la revendication 1, dans lequel la composition de lavage antimicrobienne est appliquée à la carcasse pendant une période de temps dans une plage de 10 secondes à 60 secondes ou à une concentration et pendant une période de temps suffisante pour fournir au moins une réduction de 0,8 log d'un ou de plusieurs types de microbes sur la surface du produit alimentaire à base de viande de bêtes abattues.

7. Procédé selon la revendication 1, dans lequel le produit alimentaire à base de viande de bêtes abattues est une carcasse d'animal abattu, tel que la volaille.

8. Produit alimentaire à base de viande de bêtes abattues traité au moyen du procédé selon l'une quelconque des revendications 1 à 7, de manière à produire un produit alimentaire à base de viande de bêtes abattues présentant une résistance accrue à la colonisation microbienne.

9. Composition de lavage antimicrobienne pour lutter contre la prolifération de microbes sur un produit alimentaire à base de viande de bêtes abattues, la composition de lavage comprenant :
un support fluide ayant une composition appropriée pour une application à un produit alimentaire à base de viande de bêtes abattues ; et
un composé céragénine dispersé dans le support, le composé céragénine ayant un squelette stérol et un certain nombre de groupes cationiques qui y sont attachés, dans lequel le composé céragénine est inclus dans le support fluide à une concentration dans une plage de 10 ppm à 5 000 ppm.

10. Composition de lavage antimicrobienne selon la revendication 9, dans laquelle la concentration en composé céragénine est inclus dans le support fluide à une concentration dans une plage de 10 ppm à 1 000 ppm, de préférence dans une plage de 25 ppm à 500 ppm.

11. Composition de lavage antimicrobienne selon la revendication 9, dans laquelle le support fluide comprend de l'eau.

12. Composition de lavage antimicrobienne selon la revendication 9, dans laquelle les groupes cationiques sont attachés au squelette stérol par des liaisons hydrolysables.

13. Composition de lavage antimicrobienne selon la revendication 12, dans laquelle le support comprend un acide de sorte que le support a un pH de 6 ou moins, et dans laquelle le composé céragénine a une demi-vie inférieure à 40 jours, une fois appliqué à une surface qui élève le pH du composé céragénine à un pH de 7 ou plus.

14. Composition de lavage antimicrobienne selon la revendication 12, dans laquelle le composé céragénine est choisi dans le groupe constitué par CSA-32, CSA-33, CSA-34, CSA-35, CSA-41, CSA-42, CSA-43, CSA-45, CSA-47, CSA-49, CSA-50, CSA-51, CSA-52, CSA-56, CSA-61, CSA-141, CSA-142, et leurs combinaisons, de préférence le composé céragénine comprend CSA-44.

15. Composition de lavage antimicrobienne selon la revendication 9, dans laquelle le composé céragénine est conçu, et présent à une concentration suffisante, pour tuer à la fois les formes planctoniques et biofilms de bactéries qui provoquent des maladies sans nuire aux bactéries bénéfiques résidant dans le tube digestif d'un utilisateur final.
